(19) Europäisches Patentamt
European Patent Office
Office européen des brevets

(11) **EP 4 542 941 A1**

(12) **EUROPEAN PATENT APPLICATION**
published in accordance with Art. 153(4) EPC

(43) Date of publication:
**23.04.2025 Bulletin 2025/17**

(21) Application number: **23851486.3**

(22) Date of filing: **30.06.2023**

(51) International Patent Classification (IPC):
**H04L 25/02** (2006.01)    **H04L 27/26** (2006.01)

(52) Cooperative Patent Classification (CPC):
**H04L 25/02; H04L 27/26**

(86) International application number:
**PCT/CN2023/104974**

(87) International publication number:
**WO 2024/032259 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.08.2022 CN 202210950021**

(71) Applicant: **Huawei Technologies Co., Ltd.**
**Shenzhen, Guangdong 518129 (CN)**

(72) Inventors:
• **YUAN, Fangchao**
  **Shenzhen, Guangdong 518129 (CN)**
• **SHU, Hui**
  **Shenzhen, Guangdong 518129 (CN)**
• **DENG, Xuefei**
  **Shenzhen, Guangdong 518129 (CN)**
• **CHEN, Peng**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **SIGNAL IDENTIFYING METHOD AND COMMUNICATION APPARATUS**

(57)    A signal identification method and a communication apparatus are provided, to resolve a problem that a data packet loss is caused because a receive end device cannot accurately synchronize to a target frame due to frame overlapping in a signal transmission process; and may be applied to systems such as a UWB-based wireless personal area network system, a Wi-Fi system, and a sensing system. The method includes: A first device performs channel estimation based on an L-LTF sequence corresponding to a received signal frame, to obtain a first channel estimation value, and determines, based on the first channel estimation value and mark information of N subcarrier elements, whether the L-LTF sequence corresponding to the signal frame is a target L-LTF sequence, where the first channel estimation value includes channel estimation values corresponding to M subcarrier elements in the L-LTF sequence corresponding to the signal frame, the mark information of the N subcarrier elements includes sequence numbers of the N subcarrier elements and amplitude and/or phase change values corresponding to the N subcarrier elements, M and N are positive integers, M>1, and $1 \leq N \leq M$.

FIG. 8

**Description**

**TECHNICAL FIELD**

This application relates to the communication field, and in particular, to a signal identification method and a communication apparatus.

**BACKGROUND**

In a wireless fidelity (wireless fidelity, Wi-Fi) system, data transmission is completed based on a carrier sense multiple access with collision avoidance (carrier sense multiple access with collision avoidance, CSMA/CA) protocol, and a listen-before-talk (listen-before-talk, LBT) mechanism is introduced to perform channel monitoring. Specifically, before transmitting data each time, a node needs to first monitor whether a channel is idle. If the channel is not idle, the node does not send the data. The node can send the data only when it is determined that the channel is idle, so that data that is being transmitted by another node cannot be interrupted.

Channel idle detection may be implemented in the following two manners: One is energy detection (energy detection, ED), where the energy detection is performing energy evaluation on a received signal, and if an energy value is greater than an ED threshold, it indicates that a channel is occupied by a user. The other is carrier sense (carrier sense, CS), where the carrier sense is performing a correlation operation by using a known sequence and a preamble sequence (preamble) of a radio frame physical layer header of a received signal, and if there is a correlation, a threshold lower than an ED threshold is used to determine whether a channel is idle, and it indicates that the channel is occupied by a user if the threshold exceeds a CS threshold; or if there is no correlation, ED is used to determine whether a channel is idle.

However, when the foregoing channel detection mechanism with a random backoff (backoff) feature is used between intra-frequency cells and/or in a same cell, provided that a transmit end device cannot find, through sensing, a signal sent by another transmit end device, there is a channel busy/idle misjudgment. Consequently, there may be two transmit end devices sending Wi-Fi frames on an air interface, causing a target frame to overlap with another non-target frame. However, a receive end device cannot ensure that the target frame overlapping with the non-target frame is parsed out. As a result, a data packet loss is caused.

**SUMMARY**

This application provides a signal identification method and a communication apparatus, so that a problem that a data packet loss is caused because a receive end device cannot accurately synchronize to a target frame due to frame overlapping in a signal transmission process can be resolved.

To achieve the foregoing objective, this application uses the following technical solutions.

According to a first aspect, a signal identification method is provided. The method may be performed by a first device, or may be performed by a component of the first device, for example, a processor, a chip, or a chip system of the first device, or may be implemented by a logical module or software that can implement all or some functions of the first device. The following uses an example in which the method is performed by the first device for description. The signal identification method includes: The first device receives a signal frame; the first device performs channel estimation based on a legacy long training field L-LTF sequence corresponding to the signal frame, to obtain a first channel estimation value, where the first channel estimation value includes channel estimation values corresponding to M subcarrier elements in the L-LTF sequence corresponding to the signal frame; and the first device determines, based on the first channel estimation value and mark information of N subcarrier elements, whether the L-LTF sequence corresponding to the signal frame is a target L-LTF sequence, where the mark information of the N subcarrier elements includes sequence numbers of the N subcarrier elements and amplitude and/or phase change values corresponding to the N subcarrier elements, M and N are positive integers, M>1, and $1 \leq N \leq M$.

Based on the signal identification method according to the first aspect, the first device may identify, by using the channel estimation value of the L-LTF sequence corresponding to the currently received signal frame and mark information of a marked subcarrier element in the target L-LTF sequence, the L-LTF sequence corresponding to the currently received signal frame, and the first device may determine whether the current L-LTF sequence is the target L-LTF sequence marked in a specific mark manner, so that whether the current signal frame is a target frame can be identified more quickly or earlier. In a case of signal overlapping, receiving of a non-target frame can be ended in time, and receiving of the target frame can be restarted in advance, to reduce a signal packet loss rate, and improve signal receiving reliability. In addition, more reliable channel busy/idle determining can also be formed based on whether the current signal frame is the target frame. In this way, a signal can be sent in time, thereby improving spectrum utilization.

In a possible design solution, that the first device determines, based on the first channel estimation value and mark information of N subcarrier elements, whether the L-LTF sequence corresponding to the signal frame is a target L-LTF sequence may include: The first device determines a first subcarrier element and a second subcarrier element based on the sequence numbers of the N subcarrier elements, where the first subcarrier element is a subcarrier element, in the L-LTF sequence corresponding to the signal frame, whose subcarrier element sequence number corresponds to the sequence numbers of the N subcarrier elements, and the second subcarrier element is a subcarrier element, in the L-LTF sequence corresponding to the signal frame, whose subcarrier element sequence number is adjacent to the sequence numbers of the N subcarrier elements; and the first device determines, based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence. In this way, the first device may identify, based on a Wi-Fi channel feature, the L-LTF sequence by using the channel estimation value of the subcarrier element (the second subcarrier element) whose subcarrier element sequence number is adjacent to the sequence numbers of the N subcarrier elements and the channel estimation value of the de-marked subcarrier element (the first subcarrier element) whose subcarrier element sequence number corresponds to the sequence numbers of the N subcarrier elements, so that whether the current L-LTF sequence is the target L-LTF sequence marked in the specific mark manner can be determined, and whether the current signal frame is the target frame can be identified more quickly or earlier.

In a possible design solution, that the first device determines, based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence may include: The first device determines a second channel estimation value based on the channel estimation value corresponding to the first subcarrier element, the channel estimation value corresponding to the second subcarrier element, and the amplitude and/or phase change values corresponding to the N subcarrier elements; and when an absolute value of the second channel estimation value is less than a first threshold, the first device determines that the L-LTF sequence corresponding to the signal frame is the target L-LTF sequence; or when an absolute value of the second channel estimation value is greater than or equal to the first threshold, the first device determines that the L-LTF sequence corresponding to the signal frame is not the target L-LTF sequence.

The second channel estimation value satisfies the following first relationship:

$f_2 = \sum_{i=1}^{N}(\frac{f_{11}(i)}{T_{color}(i)} \times e^{j\pi} + F\_f_{12}(i))$. When a sequence number of an $i^{th}$ subcarrier element in the second subcarrier element is different from a sequence number of a subcarrier element in the N subcarrier elements, $F\_f_{12}(i) = f_{12}(i)$; or when a sequence number of an $i^{th}$ subcarrier element in the second subcarrier element is the same as a sequence number of a subcarrier element in the N subcarrier elements, $F\_f_{12}(i) = \frac{f_{12}(i)}{T_{color}(\cdot)}$, where $f_2$ is the second channel estimation value, $f_{11}(i)$ is a channel estimation value corresponding to an $i^{th}$ subcarrier element in the first subcarrier element, $T_{color}(i)$ is an amplitude and/or phase change value corresponding to an $i^{th}$ subcarrier element in the N subcarrier elements, $f_{12}(i)$ is a channel estimation value corresponding to the $i^{th}$ subcarrier element in the second subcarrier element, $T_{color}(\cdot)$ is an amplitude and/or phase change value corresponding to a subcarrier element, in the N subcarrier elements, whose sequence number is the same as that of the $i^{th}$ subcarrier element in the second subcarrier element, a sequence number of the $i^{th}$ subcarrier element in the first subcarrier element is the same as a sequence number of the $i^{th}$ subcarrier element in the N subcarrier elements, the $i^{th}$ subcarrier element in the second subcarrier element is a subcarrier element whose sequence number is adjacent to that of the $i^{th}$ subcarrier element in the N subcarrier elements, i is a positive integer, and $1 \leq i \leq N$. In this way, the first device identifies the L-LTF sequence in a manner of de-marking the channel estimation value corresponding to the first subcarrier element, performing negation processing, and then summing up the channel estimation value corresponding to the second subcarrier element. The manner is simple, and in a scenario in which a channel condition is good or noise is small, identification of the L-LTF sequence can be quickly completed, thereby improving an identification rate.

In another possible design solution, that the first device determines, based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence may include: The first device determines a second channel estimation value and a third channel estimation value based on the channel estimation value corresponding to the first subcarrier element, the channel estimation value corresponding to the second subcarrier element, and the amplitude and/or phase change values corresponding to the N subcarrier elements; and the first device determines, based on the second channel estimation value and the third channel estimation value, whether the L-LTF sequence corresponding to the signal frame is the target L-LTF sequence.

The second channel estimation value satisfies the following second relationship:

$$f_2 = \sum_{i=1}^{N}\left(\frac{f_{11}(i)}{T_{color}(i)} \times e^{j\pi} + \right.$$

$F\_f_{12}(i))$; and the third channel estimation value satisfies the following third relationship:

$$f_3 = \left(\sum_{i=1}^{N}\frac{f_{11}(i)}{T_{color}(i)} + \right.$$

$F\_f_{12}(i))$. When a sequence number of an $i^{th}$ subcarrier element in the second subcarrier element is different from a sequence number of a subcarrier element in the N subcarrier elements, $F\_f_{12}(i) = f_{12}(i)$; or when a sequence number of an $i^{th}$ subcarrier element in the second subcarrier element is the same as a sequence number of a subcarrier element in the N subcarrier elements, $F\_f_{12}(i) = \frac{f_{12}(i)}{T_{color}(\cdot)}$, where $f_2$ is the second channel estimation value, $f_3$ is the third channel estimation value, $f_{11}(i)$ is a channel estimation value corresponding to an $i^{th}$ subcarrier element in the first subcarrier element, $T_{color}(i)$ is an amplitude and/or phase change value corresponding to an $i^{th}$ subcarrier element in the N subcarrier elements, $f_{12}(i)$ is a channel estimation value corresponding to the $i^{th}$ subcarrier element in the second subcarrier element, $T_{color}(\cdot)$ is an amplitude and/or phase change value corresponding to a subcarrier element, in the N subcarrier elements, whose sequence number is the same as that of the $i^{th}$ subcarrier element in the second subcarrier element, a sequence number of the $i^{th}$ subcarrier element in the first subcarrier element is the same as a sequence number of the $i^{th}$ subcarrier element in the N subcarrier elements, the $i^{th}$ subcarrier element in the second subcarrier element is a subcarrier element whose sequence number is adjacent to that of the $i^{th}$ subcarrier element in the N subcarrier elements, i is a positive integer, and $1 \leq i \leq N$. In this way, on a basis of identification based on the second channel estimation value, the first device may further determine whether a sum of a channel estimation value that is obtained after the channel estimation value corresponding to the first subcarrier element is de-marked and the channel estimation value corresponding to the second subcarrier element is a sum of co-directional amplitudes. Identification by combining the second channel estimation value and the third channel estimation value can improve identification accuracy. In a scenario in which a channel condition is poor or noise is large, identification of the L-LTF sequence can also be implemented, thereby further improving signal identification reliability.

In a possible design solution, that the first device determines, based on the second channel estimation value and the third channel estimation value, whether the L-LTF sequence corresponding to the signal frame is the target L-LTF sequence may include: When a ratio of an absolute value of the second channel estimation value to an absolute value of the third channel estimation value is less than a second threshold, the first device determines that the L-LTF sequence corresponding to the signal frame is the target L-LTF sequence; or when a ratio of an absolute value of the second channel estimation value to an absolute value of the third channel estimation value is greater than or equal to the second threshold, the first device determines that the L-LTF sequence corresponding to the signal frame is not the target L-LTF sequence. In this way, the first device may identify the L-LTF sequence based on the ratio of the absolute value of the second channel estimation value to the absolute value of the third channel estimation value. On a basis of ensuring signal identification reliability, an identification manner is simple, and a signal identification rate can be improved.

According to a second aspect, a signal identification method is provided. The method may be performed by a second device, or may be performed by a component of the second device, for example, a processor, a chip, or a chip system of the second device, or may be implemented by a logical module or software that can implement all or some functions of the second device. The following uses an example in which the method is performed by the second device for description. The signal identification method includes: The second device marks amplitudes and/or phases of N subcarrier elements in a legacy long training field L-LTF sequence corresponding to a signal frame, where the L-LTF sequence corresponding to the signal frame includes M subcarrier elements, M and N are positive integers, M>1, and $1 \leq N \leq M$; and the second device sends the signal frame to a first device.

Based on the signal identification method according to the second aspect, the second device may mark the L-LTF sequence by performing a specific amplitude and/or phase change on a specific subcarrier element in the L-LTF sequence, so that the L-LTF sequence having a particular mark manner may be used to form a signal frame for sending service data. This can ensure that a peak-to-average power ratio and fine frequency offset estimation of a signal are basically not affected, and can also improve a signal identification degree and a signal identification rate.

In a possible design solution, when the N subcarrier elements include subcarriers with consecutive sequence numbers, amplitude and/or phase change values of subcarrier elements with adjacent sequence numbers are different. In this way, when sequence numbers, of subcarrier elements, that are selected for marking are consecutive, subcarrier elements with adjacent sequence numbers need to be marked in different manners, to improve signal identification accuracy.

According to a third aspect, a communication apparatus is provided. The communication apparatus includes a processing module and a transceiver module. The transceiver module is configured to receive a signal frame; the processing module is configured to perform channel estimation based on a legacy long training field L-LTF sequence corresponding to the signal frame, to obtain a first channel estimation value, where the first channel estimation value includes channel estimation values corresponding to M subcarrier elements in the L-LTF sequence corresponding to the signal frame; and the processing module is further configured to determine, based on the first channel estimation value and mark information of N subcarrier elements, whether the L-LTF sequence corresponding to the signal frame is a target L-LTF sequence, where the mark information of the N subcarrier elements includes sequence numbers of the N subcarrier elements and amplitude and/or phase change values corresponding to the N subcarrier elements, M and N are positive integers, M>1, and 1≤N≤M.

In a possible design solution, that the processing module is further configured to determine, based on the first channel estimation value and mark information of N subcarrier elements, whether the L-LTF sequence corresponding to the signal frame is a target L-LTF sequence may include: The processing module is configured to determine a first subcarrier element and a second subcarrier element based on the sequence numbers of the N subcarrier elements, where the first subcarrier element is a subcarrier element, in the L-LTF sequence corresponding to the signal frame, whose subcarrier element sequence number corresponds to the sequence numbers of the N subcarrier elements, and the second subcarrier element is a subcarrier element, in the L-LTF sequence corresponding to the signal frame, whose subcarrier element sequence number is adjacent to the sequence numbers of the N subcarrier elements; and the processing module is further configured to determine, based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence.

In a possible design solution, that the processing module is further configured to determine, based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence includes: The processing module is configured to determine a second channel estimation value based on the channel estimation value corresponding to the first subcarrier element, the channel estimation value corresponding to the second subcarrier element, and the amplitude and/or phase change values corresponding to the N subcarrier elements; and the processing module is further configured to: when an absolute value of the second channel estimation value is less than a first threshold, determine that the L-LTF sequence corresponding to the signal frame is the target L-LTF sequence; or the processing module is further configured to: when an absolute value of the second channel estimation value is greater than or equal to the first threshold, determine that the L-LTF sequence corresponding to the signal frame is not the target L-LTF sequence.

The second channel estimation value satisfies the following first relationship:

$$f_2 = \sum_{i=1}^{N} \left( \frac{f_{11}(i)}{T_{color}(i)} \times e^{j\pi} + F\_f_{12}(i) \right).$$ When a sequence number of an $i^{th}$ subcarrier element in the second subcarrier element is different from a sequence number of a subcarrier element in the N subcarrier elements, $F\_f_{12}(i) = f_{12}(i)$; or when a sequence number of an $i^{th}$ subcarrier element in the second subcarrier element is the same as a sequence number of a subcarrier element in the N subcarrier elements, $F\_f_{12}(i) = \frac{f_{12}(i)}{T_{color}(\cdot)}$, where $f_2$ is the second channel estimation value, $f_{11}(i)$ is a channel estimation value corresponding to an $i^{th}$ subcarrier element in the first subcarrier element, $T_{color}(i)$ is an amplitude and/or phase change value corresponding to an $i^{th}$ subcarrier element in the N subcarrier elements, $f_{12}(i)$ is a channel estimation value corresponding to the $i^{th}$ subcarrier element in the second subcarrier element, $T_{color}(\cdot)$ is an amplitude and/or phase change value corresponding to a subcarrier element, in the N subcarrier elements, whose sequence number is the same as that of the $i^{th}$ subcarrier element in the second subcarrier element, a sequence number of the $i^{th}$ subcarrier element in the first subcarrier element is the same as a sequence number of the $i^{th}$ subcarrier element in the N subcarrier elements, the $i^{th}$ subcarrier element in the second subcarrier element is a subcarrier element whose sequence number is adjacent to that of the $i^{th}$ subcarrier element in the N subcarrier elements, i is a positive integer, and 1≤i≤N.

In another possible design solution, that the processing module is further configured to determine, based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence may include: The processing module is configured to determine a second channel estimation value and a third channel estimation value based on the channel estimation value corresponding to the first subcarrier element, the channel estimation value corresponding to the second subcarrier element, and the amplitude and/or phase change values corresponding to the N subcarrier elements; and the processing module is further configured to determine, based on the second channel estimation value and the third channel estimation value, whether the L-LTF sequence corresponding to the signal frame is the target L-LTF sequence.

The second channel estimation value satisfies the following second relationship:

$$f_2 = \sum_{i=1}^{N} \left( \frac{f_{11}(i)}{T_{color}(i)} \times e^{j\pi} + F\_f_{12}(i) \right);$$ and the third channel estimation value satisfies the following third relationship:

$f_3 = \sum_{i=1}^{N}(\frac{f_{11}(i)}{T_{color}(i)} +$ $F\_f_{12}(i))$. When a sequence number of an ith subcarrier element in the second subcarrier element is different from a sequence number of a subcarrier element in the N subcarrier elements, $F\_f_{12}(i) = f_{12}(i)$; or when a sequence number of an ith subcarrier element in the second subcarrier element is the same as a sequence number of a

$$F\_f_{12}(i) = \frac{f_{12}(i)}{T_{color}(\cdot)}$$

subcarrier element in the N subcarrier elements, , where $f_2$ is the second channel estimation value, $f_3$ is the third channel estimation value, $f_{11}(i)$ is a channel estimation value corresponding to an ith subcarrier element in the first subcarrier element, $T_{color}(i)$ is an amplitude and/or phase change value corresponding to an ith subcarrier element in the N subcarrier elements, $f_{12}(i)$ is a channel estimation value corresponding to the ith subcarrier element in the second subcarrier element, $T_{color}(\cdot)$ is an amplitude and/or phase change value corresponding to a subcarrier element, in the N subcarrier elements, whose sequence number is the same as that of the ith subcarrier element in the second subcarrier element, a sequence number of the ith subcarrier element in the first subcarrier element is the same as a sequence number of the ith subcarrier element in the N subcarrier elements, the ith subcarrier element in the second subcarrier element is a subcarrier element whose sequence number is adjacent to that of the ith subcarrier element in the N subcarrier elements, i is a positive integer, and 1≤i≤N.

In a possible design solution, that the processing module is further configured to determine, based on the second channel estimation value and the third channel estimation value, whether the L-LTF sequence corresponding to the signal frame is the target L-LTF sequence may include: The processing module is configured to: when a ratio of an absolute value of the second channel estimation value to an absolute value of the third channel estimation value is less than a second threshold, determine that the L-LTF sequence corresponding to the signal frame is the target L-LTF sequence; or the processing module is configured to: when a ratio of an absolute value of the second channel estimation value to an absolute value of the third channel estimation value is greater than or equal to the second threshold, determine that the L-LTF sequence corresponding to the signal frame is not the target L-LTF sequence.

Optionally, the transceiver module may include a receiving module and a sending module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module. The storage module stores a program or instructions. When the processing module executes the program or the instructions, the communication apparatus according to the third aspect may be enabled to perform the method according to the first aspect.

It should be noted that the communication apparatus according to the third aspect may be a terminal device or a network device, or may be a chip (system) or another part or component that may be disposed in the terminal device or the network device, or may be an apparatus that includes the terminal device or the network device. This is not limited in this application.

In addition, for technical effect of the communication apparatus according to the third aspect, refer to the technical effect of the method according to the first aspect. Details are not described herein again.

According to a fourth aspect, a communication apparatus is provided. The communication apparatus includes a processing module and a transceiver module. The processing module is configured to mark amplitudes and/or phases of N subcarrier elements in a legacy long training field L-LTF sequence corresponding to a signal frame, where the L-LTF sequence corresponding to the signal frame includes M subcarrier elements, M and N are positive integers, M>1, and 1≤N≤M; and the transceiver module is configured to send the signal frame to a first device.

In a possible design solution, when the N subcarrier elements include subcarriers with consecutive sequence numbers, amplitude and phase change values of subcarrier elements with adjacent sequence numbers are different.

Optionally, the transceiver module may include a receiving module and a sending module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus according to the fourth aspect may be enabled to perform the method according to the second aspect.

It should be noted that the communication apparatus according to the fourth aspect may be a terminal device or a network device, or may be a chip (system) or another part or component that may be disposed in the terminal device or the network device, or may be an apparatus that includes the terminal device or the network device. This is not limited in this application.

In addition, for technical effect of the communication apparatus according to the fourth aspect, refer to the technical effect of the method according to the second aspect. Details are not described herein again.

According to a fifth aspect, a communication apparatus is provided. The communication apparatus includes a processor. The processor is coupled to a memory, and the processor is configured to execute a computer program stored in the memory, so that the communication apparatus performs the method according to any one of the possible implementations of the first aspect and the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In this application, the communication apparatus according to the fifth aspect may be the first device according to the first aspect or the second device according to the second aspect, or a chip (system) or another part or component that may be disposed in the first device or the second device, or an apparatus that includes the first device or the second device.

In addition, for technical effect of the communication apparatus according to the fifth aspect, refer to the technical effect of the method according to any one of the possible implementations of the first aspect and the second aspect. Details are not described herein again.

According to a sixth aspect, a communication system is provided. The communication system includes a first device and a second device. The first device is configured to perform the signal identification method according to the first aspect, and the second device is configured to perform the signal identification method according to the second aspect.

According to a seventh aspect, a computer-readable storage medium is provided. The computer-readable storage medium includes a computer program or instructions; and when the computer program or the instructions are run on a computer, the computer is enabled to perform the method according to any one of the possible implementations of the first aspect and the second aspect.

According to an eighth aspect, a computer program product is provided. The computer program product includes a computer program or instructions; and when the computer program or the instructions are run on a computer, the computer is enabled to perform the method according to any one of the possible implementations of the first aspect and the second aspect.

**BRIEF DESCRIPTION OF DRAWINGS**

FIG. 1 is a diagram of a signal collision scenario according to an embodiment of this application;
FIG. 2 is another diagram of a signal collision scenario according to an embodiment of this application;
FIG. 3 is still another diagram of a signal collision scenario according to an embodiment of this application;
FIG. 4 is a structural diagram of overlapping between a target frame and a non-target frame according to an embodiment of this application;
FIG. 5 is a structural diagram of a Wi-Fi frame in the 802.11ac protocol according to an embodiment of this application;
FIG. 6 is a structural diagram of distinguishing between intra-frequency cells based on BSS colors according to an embodiment of this application;
FIG. 7 is a diagram of an architecture of a Wi-Fi communication system according to an embodiment of this application;
FIG. 8 is a schematic flowchart of a signal identification method according to an embodiment of this application;
FIG. 9 is a structural diagram of an OFDM training structure defined in the 802.11 2012 standard protocol according to an embodiment of this application;
FIG. 10 is a change diagram of unmarked and marked first channel estimation values according to an embodiment of this application;
FIG. 11 is another change diagram of unmarked and marked first channel estimation values according to an embodiment of this application;
FIG. 12 is still another change diagram of unmarked and marked first channel estimation values according to an embodiment of this application;
FIG. 13 is still another change diagram of unmarked and marked first channel estimation values according to an embodiment of this application;
FIG. 14 is a diagram of a scenario for distinguishing between intra-frequency cells according to an embodiment of this application;
FIG. 15 is a diagram of a scenario for distinguishing between different users in a same cell according to an embodiment of this application;
FIG. 16 is a diagram of a scenario of parallel sending in intra-frequency cells according to an embodiment of this application;
FIG. 17 is a structural diagram of alternate sending of signals in intra-frequency cells according to an embodiment of this application;

FIG. 18 is a structural diagram of parallel sending of signals in intra-frequency cells according to an embodiment of this application;

FIG. 19 is a diagram of a structure of a communication apparatus according to an embodiment of this application; and

FIG. 20 is a diagram of a structure of another communication apparatus according to an embodiment of this application.

## DESCRIPTION OF EMBODIMENTS

For ease of understanding, the following first describes related technologies in embodiments of this application.

In CSMA/CA, a node needs to perform a random backoff (backoff) process before transmission each time. For example, the node randomly generates a random backoff count value based on a specified parameter, for example, a contention window value. In a random backoff process, the node senses a channel in a slot (slot) of every 9 microseconds (microseconds, μs). If the channel is sensed as idle, the node performs backoff once, that is, decreases a count value of a counter by one. If the channel is sensed as busy, the node suspends a counter until a count value of the counter is 0, and then the node can send data.

CSMA/CA uses the following two manners of channel idle detection:

(1) Energy detection (ED): A receive end performs energy evaluation on a received signal. If an energy value is greater than an ED threshold, for example, -62 decibels relative to one milliwatt (decibels relative to one milliwatt, dBm)/20 megahertz (megahertz, MHz), it indicates that a channel is occupied by a user and the channel is busy. If an energy value is less than an ED threshold, it indicates that a channel is not occupied by a user and the channel is idle.

(2) Carrier sense (CS): A receive end performs a correlation operation by using a known sequence and a fixed sequence (namely, a preamble) of a radio frame physical layer header of a received signal, and if there is a correlation, a threshold lower than an ED threshold is used to determine whether a channel is idle, and it indicates that the channel is occupied by a user if the threshold exceeds a CS threshold (for example, -82 dBm/20 MHz); or if there is no correlation, an ED threshold is used to determine whether a channel is idle.

However, there is a probability of signal collision based on the foregoing random backoff detection mechanism, causing a target frame to overlap with another non-target frame. However, a receive end device cannot ensure that the target frame overlapping with the non-target frame is parsed out. As a result, a data packet loss is caused.

The following provides descriptions with reference to diagrams of three possible scenarios in which signal collision occurs.

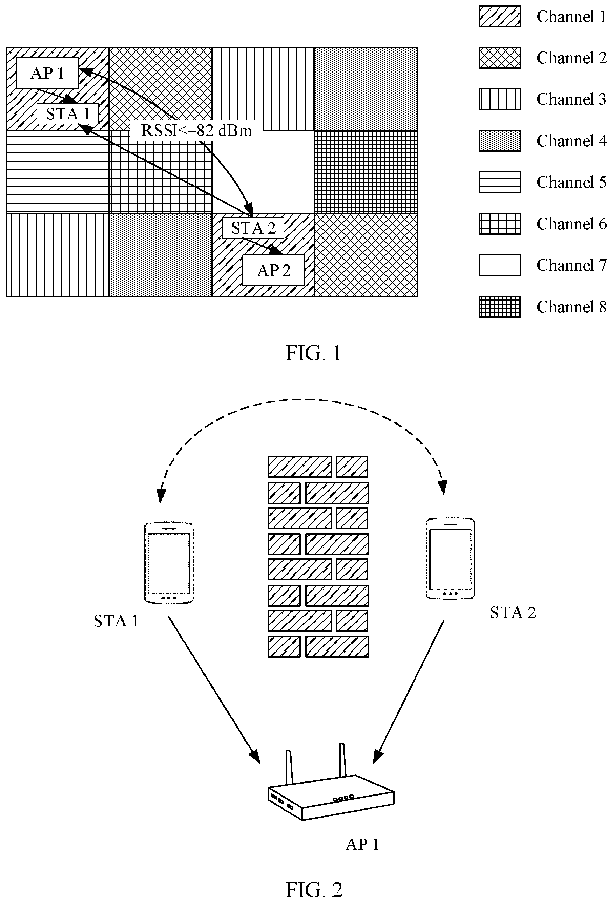

Scenario 1: As shown in FIG. 1, different channels are cross-deployed, intra-frequency cells use a same channel, and the intra-frequency cells are separated by more than two other frequency cells, and are usually deployed in a campus office scenario. A channel 1 is used as an example. An access point (access point, AP) 1 and an AP 2 use the channel 1 to send data, and a cell in which the AP 1 is located and a cell in which the AP 2 is located are intra-frequency cells. In this case, the AP 1 needs to send a downlink service to a station (station, STA) 1, and a STA 2 in the cell in which the AP 2 is located needs to send an uplink service to the AP 2. However, a received signal strength indicator (received signal strength indicator, RSSI) between the STA 2 and the AP 1 is less than -82 dBm, and the STA 2 and the AP 1 cannot know each other who is sending a signal. In this case, regardless of whether the STA 2 and the AP 1 perform ED detection or CS sense, both the STA 2 and the AP 1 determine that the channel is idle, and both the STA 2 and the AP 1 send signals on an air interface. That is, when the AP 1 sends a signal, the STA 2 is also sending a signal. Consequently, intra-frequency parallel interference occurs, signal collision occurs, and a data packet loss is caused.

Scenario 2: As shown in FIG. 2, a STA 1 and a STA 2 are in a cell in which an AP 1 is located, and there is an obstruction between the STA 1 and the STA 2. If there is a thick wall between the STA 1 and the STA 2. As a result, an energy loss of signals between the STA 1 and the STA 2 is large, and the STA 1 and the STA 2 cannot know each other who is sending a signal. In this case, if both the STA 1 and the STA 2 send services to the AP 1, signal collision also occurs. In this case, the STA 1 and the STA 2 are hidden nodes of each other, and both the STA 1 and the STA 2 cannot be mutually found through sensing, to determine that a channel is idle. Consequently, signal collision occurs, and a data packet loss is caused.

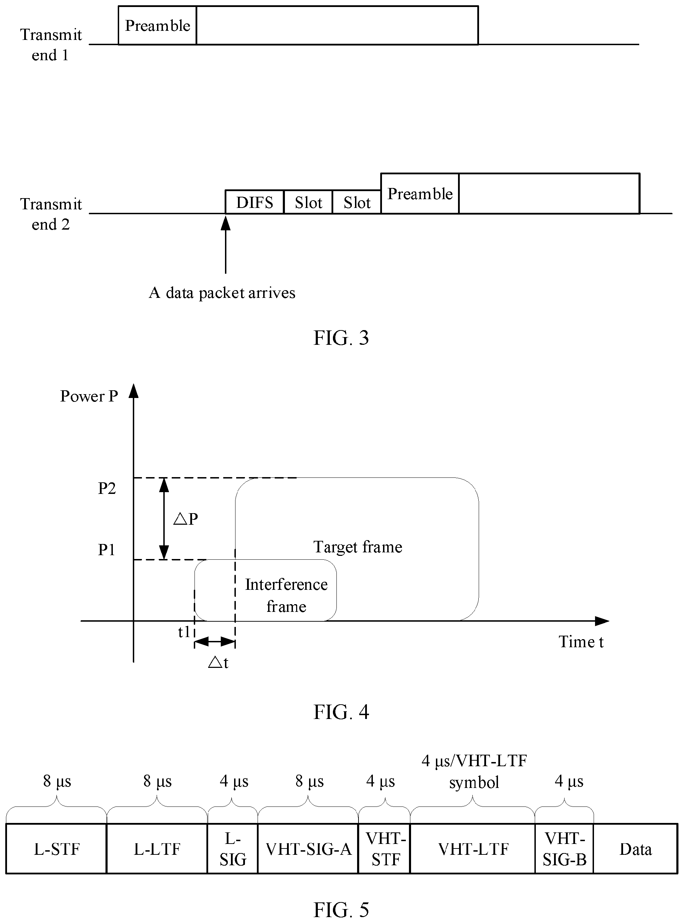

Scenario 3: As shown in FIG. 3, when a data packet of a transmit end 2 arrives, a transmit end 1 is already sending the data packet, and the transmit end 2 needs to perform channel idle detection before sending the data packet. However, the transmit end 2 is already missed a preamble (preamble) synchronization header. In this case, when performing channel detection in a distributed inter-frame spacing (distributed inter-frame spacing, DIFS), the transmit end 2 does not correlate the preamble, and therefore uses an ED threshold (for example, -62 dBm) to determine whether a channel is idle. When an energy value of the detected signal is less than -62 dBm, the channel is determined as idle. As a result, there is a misjudgment, and consequently collision occurs.

There is a signal collision problem in all the foregoing three scenarios. The signal collision means that two frames received by a receive end overlap with each other, and this may also be referred to as message in message (message in message, MIM). As shown in FIG. 4, a target frame overlaps with an interference frame (which may also be referred to as a non-target frame), and signal power of the target frame is far greater than signal power of the interference frame. Because the receive end first synchronizes to the interference frame, the receive end already enters a receiving procedure at a moment t1, and frame synchronization can be performed again only after decoding of the entire interference frame ends. In this case, the preamble of the target frame is already missed, and the target frame cannot be locked, thereby causing a data packet loss; and the interference frame is also interfered with by a target frame with high power, and cannot be correctly decoded. Consequently, a data packet loss is caused.

At present, MIM may be resolved by using a capture effect (capture effect). In a process of synchronizing to a non-target frame, a signal energy change may be detected. If it is detected that a signal power change reaches a specific threshold (where a power difference between frames is required to be greater than 10 dB), receiving of the currently captured signal frame may be stopped, and a signal frame is re-captured or re-synchronized on an air interface. As shown in FIG. 4, if a receiver machine receives the interference frame at the moment t1 and detects a power change $\triangle$P after $\triangle$t, the receiver machine immediately stops receiving of the interference frame, and re-captures or resynchronizes a physical layer header of an air interface signal.

However, when the target frame is obtained by using the capture effect, there are the following three problems:

(1) A power difference between the received target frame and the non-target frame needs to be at least 10 dB, and signals with a power difference of 0 dB to 10 dB cannot be identified.

(2) For a Wi-Fi frame in the 802.11n/ac/ax protocol, there is a high throughput (high throughput, HT)/very high throughput (very high throughput, VHT)/high efficiency short training field (high efficiency short training field, HE-STF), and is used for secondary automatic gain control (auto gain control, AGC). When a power change occurs in the foregoing sub-field, a receiver machine cannot determine the power change, and consequently a power capture function cannot be used.

For example, FIG. 5 is a structural diagram of a Wi-Fi frame in the 802.11ac protocol. As shown in FIG. 5, the structure of the Wi-Fi frame includes: an 8-$\mu$s legacy short training field (legacy short training field, L-STF), an 8-$\mu$s legacy long training field (legacy long training field, L-LTF), a 4-$\mu$s legacy signal field (legacy signal field, L-SIG), an 8-$\mu$s VHT-SIG-A, a 4-$\mu$s VHT-STF, each VHT-LTF whose VHT-LTF symbol length is 4 $\mu$s, a 4-$\mu$s VHT-SIG-B, and a data part. When a target frame arrives during a VHT-STF period of a non-target frame, a receiver machine cannot determine a power change. If a frame length is 1 ms and duration of the VHT-STF is 4 $\mu$s, a probability that the receiver machine is affected is 4%. In an industrial scenario, a data packet length is about 300 $\mu$s, and a packet loss rate is up to 1%. Consequently, great impact is caused.

It should be noted that each sub-field in the Wi-Fi frame may also be referred to as a field.

(3) Currently, for most receiver machines, processing priorities of the L-SIG, the VHT-SIG-A, the HT-SIG, and the HE-SIG-A in the frame are high, and reset time is long after a target frame of a large signal is encountered. Consequently, a physical layer synchronization header of the target frame of the large signal is missed, and a packet loss is caused in the target frame.

In addition, a basic service set (basic service set, BSS) color (Color) field is introduced in the 802.11ax protocol. In an air interface data transmission process, the BSS color field is carried in a high efficiency signal field A (high efficiency signal field, HE-SIG-A) in a physical layer (physical layer, PHY) header of a physical layer protocol data unit (physical layer protocol data unit, PPDU) in a high efficiency (high efficiency, HE) format in a form of 6 bits (bits). BSS color fields with different values may represent different cells in intra-frequency cells, the receiver machine may determine, based on a received BSS color, whether the received BSS color is consistent with a pre-negotiated BSS color; and if the received BSS color is not consistent with the pre-negotiated BSS color, may re-obtain the Wi-Fi frame from an air interface.

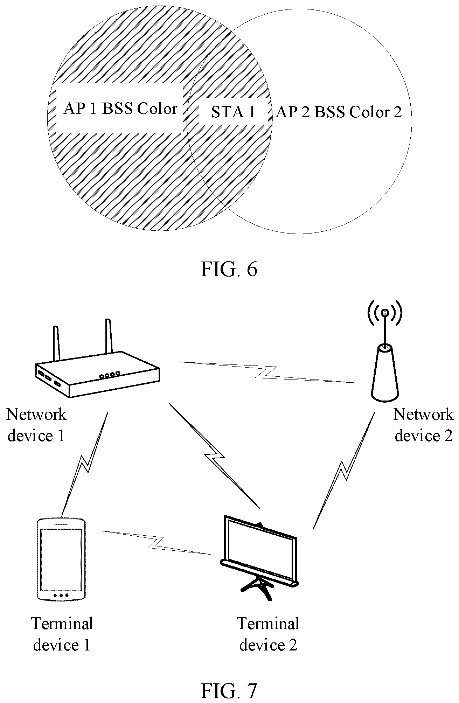

As shown in FIG. 6, if a STA 1 receives service data from an AP 1, a cell in which an AP 1 is located and a cell in which an AP 2 is located are intra-frequency cells, and a BSS color field in a signal sent by the AP 1 is different from a BSS color field in a signal sent by the AP 2. For example, a BSS color field in a signal frame sent by the AP 1 is blue, and a BSS color field in a signal frame sent by the AP 2 is green. If the STA 1 receives the service data from the AP 1, the STA 1 may determine, by identifying whether the BSS color field in the received signal frame is blue, whether to continue to receive the signal frame. If the STA 1 determines not to continue to receive the signal frame, the STA 1 abandons the currently received signal frame, and re-captures a blue BSS color on the air interface.

However, the BSS color can be used only by a terminal device in the 802.11ax protocol, and can be used to distinguish between only users in different cells, but cannot be used to distinguish between users in a same cell. In addition, for a receiver machine, a cell can be identified only after at least parsing of the HE-SIG-A is completed, and frames that are overlapped earlier than the HE-SIG-A cannot be identified. Therefore, the MIM problem cannot be avoided by using the BSS color, and consequently a data packet loss is caused.

Therefore, embodiments of this application provides a signal identification method, so that a problem that a data packet loss is caused because a receive end device cannot accurately synchronize to a target frame due to frame overlapping in a signal transmission process can be resolved. The signal identification method is applicable to a scenario that has a high requirement on reliability and sensitivity of a Wi-Fi signal, for example, an industrial scenario such as control of a wireless workshop reconstruction device, an automated guided vehicle (automated guided vehicle, AGV), an uncrewed aerial vehicle of steel, a mechanical arm device of a vehicle manufacturer, or the like, for another example, a home game scenario such as a real-time battle mobile phone precise control game, a quasi-virtual reality (virtual reality, VR)/augmented reality (augmented reality, AR) real-time immersive game, or the like. It should be noted that the signal frame in embodiments of this application is a Wi-Fi frame.

The following describes technical solutions of this application with reference to accompanying drawings.

The technical solutions in embodiments of this application may be applied to various communication systems, for example, a Wi-Fi system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system, an LTE frequency division duplex (frequency division duplex, FDD) system, an LTE time division duplex (time division duplex, TDD) system, and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

Various aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may also be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design solution. Exactly, the term "example" is used to present a concept in a specific manner.

In embodiments of this application, sometimes a subscript, for example, $W_1$, may be written incorrectly in a non-subscript form, for example, W1. Expressed meanings are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to similar technical problems.

For ease of understanding embodiments of this application, a Wi-Fi communication system shown in FIG. 7 is first used as an example to describe in detail a communication system to which embodiments of this application are applicable. For example, FIG. 7 is a diagram of an architecture of a Wi-Fi communication system according to an embodiment of this application.

As shown in FIG. 7, the Wi-Fi communication system includes one or more network devices such as a network device 1 and a network device 2, and one or more terminal devices such as a terminal device 1 and a terminal device 2. Communication between the network devices may be performed, communication between the network device and the terminal device may also be performed, and communication between the terminal devices may also be performed. FIG. 7 shows an example of two network devices and two terminal devices. A quantity of network devices and a quantity of terminal devices are not limited in this embodiment of this application.

A cell in which the network device 1 is located and a cell in which the network device 2 is located are intra-frequency cells. In a scenario shown in FIG. 1, the network device 1 is an AP 1, and the network device 2 is an AP 2. A cell in which the AP 1 is located and a cell in which the AP 2 is located are intra-frequency cells, and both the AP 1 and the AP 2 use a channel 1 to send signals. The terminal device 1 and the terminal device 2 may be located in a same cell, or may be located in different cells. For example, the terminal device 1 and the terminal device 2 are located in the cell in which the AP 1 is located; or the terminal device 1 is located in the cell in which the AP 1 is located, and the terminal device 2 is located in the cell in which the AP 2 is located.

In the Wi-Fi communication system provided in this embodiment of this application, when one device (which includes a network device or one terminal device) sends data to another device (which includes a network device or a terminal device), a device that sends the data is a transmit end, and a device that receives data is a receive end. The receive end is configured to implement functions such as signal obtaining and processing, and the transmit end is configured to implement functions such as signal generation and sending.

In some possible cases, the transmit end may be used as a receive end to implement functions such as signal obtaining and processing, and the receive end may be used as a transmit end to implement functions such as signal generation and sending. In other words, one physical device may be a transmit end, or may be a receive end, or may be both a transmit end and a receive end.

The technical solutions provided in this application are applicable to a wireless local area network (wireless local area network, WLAN) scenario, for example, are applicable to the institute of electrical and electronics engineers (institute of electrical and electronics engineers, IEEE) 802.11 system standard, for example, the 802.11a/b/g standard, the 802.11n standard, the 802.11ac standard, the 802.11ax standard, or a next-generation standard of the 802.11ax standard, for example, the 802.11be standard, Wi-Fi 7, or extremely high throughput (extremely high throughput, EHT), or for another example, a next-generation standard of 802.11be, Wi-Fi 8, or a next-generation standard of Wi-Fi 8.

Embodiments of this application are mainly described by using an example of a deployed WLAN network, especially a network to which the IEEE 802.11 system standard is applied. A person skilled in the art easily understands that aspects involved in this application may be extended to other networks using various standards or protocols, for example, BLUETOOTH (Bluetooth), a high performance radio LAN (high performance radio LAN, HIPERLAN) (which is a wireless standard similar to the IEEE 802.11 standard, and is mainly used in Europe), a wide area network (wide area network, WAN), a personal area network (personal area network, PAN), or another network that is known or developed in the future. Therefore, regardless of used coverage and a used wireless access protocol, various aspects provided in this application are applicable to any appropriate wireless network.

In embodiments of this application, the network device is a device that is located on a network side of the Wi-Fi communication system and has a wireless transceiver function, or a chip or a chip system that may be disposed in the device. The network device includes but is not limited to: an AP, for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, a home NodeB, HNB), a baseband unit (baseband unit, BBU), a wireless relay node, a wireless backhaul node, a transmission point (a transmission reception point, TRP or a transmission point, TP), or the like. Alternatively, the network device may be a gNB or a transmission point (a TRP or a TP) in a 5G system, for example, a new radio (new radio, NR) system, or may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point, a road side unit (road side unit, RSU) having a base station function, or the like.

The terminal device is a terminal that accesses the Wi-Fi communication system and that has a wireless transceiver function, or a chip or a chip system that may be disposed in the terminal. The terminal device may also be referred to as a non-access point station (non-AP station, non-AP STA), a STA, a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a VR terminal device, an AR terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement the signal identification method provided in this application.

It should be noted that the signal identification method provided in embodiments of this application is applicable to any two nodes shown in FIG. 7, for example, between a network device and a terminal device, between network devices, and between terminal devices. For a specific implementation, refer to the following method embodiments. Details are not described herein again.

It should be noted that, the solutions in embodiments of this application may alternatively be applied to another communication system, and a corresponding name may alternatively be replaced with a name of a corresponding function in the another communication system.

It should be understood that FIG. 7 is merely a simplified diagram used as an example for ease of understanding. The communication system may further include another network device and/or another terminal device, not drawn in FIG. 7.

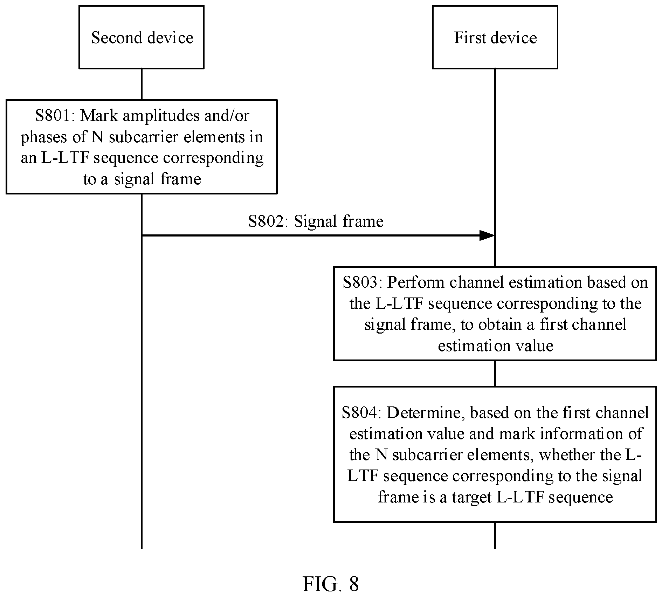

The following describes in detail the signal identification method provided in embodiments of this application with reference to FIG. 8 to FIG. 18.

For example, FIG. 8 is a schematic flowchart of a signal identification method according to an embodiment of this application. The signal identification method is applicable to communication between any two nodes in FIG. 1, FIG. 2, or FIG. 7.

As shown in FIG. 8, the signal identification method may include the following steps.

S801: A second device marks amplitudes and/or phases of N subcarrier elements in an L-LTF sequence corresponding to a signal frame.

The second device may be any terminal device or any network device shown in FIG. 7. The L-LTF sequence corresponding to the signal frame includes M subcarrier elements, the L-LTF sequence is a frequency domain sequence, each signal frame corresponds to two same L-LTF sequences, M and N are positive integers, M>1, and 1≤N≤M.

In this embodiment of this application, marking a subcarrier element in the L-LTF sequence may also be referred to as coloring the subcarrier element or may be referred to as marking or coloring the L-LTF sequence, and indicates changing an amplitude and/or a phase of the subcarrier element. For example, different devices may select different subcarrier elements in the L-LTF sequence to make same or different amplitude and/or phase changes, or select a same subcarrier element to use same or different amplitude and/or phase changes, that is, the devices have different marking or coloring manners for the L-LTF sequence, so that signal frames sent by the devices correspond to different L-LTF sequences, and the L-LTF sequences may be used to distinguish between signals sent by the devices.

For example, the second device selects amplitudes and/or phases of N subcarrier elements from the M subcarrier elements for marking, that is, the second device selects the N subcarrier elements, and changes amplitude values and/or phase values of the N subcarrier elements to mark changed N subcarrier elements, to obtain a marked or colored L-LTF sequence. For example, a marking or coloring process of a single subcarrier element may be represented as the following formula: $x_{ltf}[m] = T_{Color}[m] * s_{LTF}[m]$, where

m is a sequence number of a subcarrier element, $x_{ltf}[m]$ is a value of a marked m$^{th}$ subcarrier element, $T_{Color}[m]$ is an amplitude and/or phase change value of the m$^{th}$ subcarrier element, $s_{LTF}[m]$ is a value of an unmarked m$^{th}$ subcarrier element, m is a positive integer, and 0≤m≤M-1. It may be understood that the second device performs marking or coloring processing on all subcarrier elements in the entire L-LTF sequence, where amplitudes and/or phases of selected N subcarrier elements are changed, that is, $T_{Color}[m] \# 1$; and phases and/or amplitudes of remaining subcarrier elements are not changed, that is, $T_{Color}[m] = 1$. Alternatively, it may be understood that, in the L-LTF sequence, for marked N subcarrier elements, $T_{Color}[m] \# 1$; and for unmarked subcarrier elements, $T_{Color}[m] = 1$.

A 20 MHz bandwidth is used as an example. The L-LTF sequence defined in the standard protocol includes 64 subcarrier elements, and a value of each subcarrier element in the sequence is 1, 0, or -1. For example, L[1, 64] below is an unmarked L-LTF sequence allocated to the second device:

L[1,64]={0, 0, 0, 0, 0, 0, 1, 1, -1, -1, 1, 1, -1, 1, -1, 1, 1, 1, 1, 1, 1, -1, -1, 1, 1, -1, 1, -1, 1, 1, 1, 1, 0, 1, -1, -, 1, 1, 1, -1, 1, -1, 1, -1, -1, -1, -1, -1, 1, 1, -1, -1, 1, -1, 1, -1, 1, 1, 1, 1, 0, 0, 0, 0, 0}, where sequence numbers of subcarrier elements in the unmarked L-LTF sequence are 1 to 64. It may be understood that, a quantity of subcarrier elements in the L-LTF sequence may be determined based on a bandwidth. In this embodiment of this application, an unmarked L-LTF sequence being L[1, 64] above is used for description.

If an amplitude of the foregoing 7$^{th}$ subcarrier element whose value is 1 is changed, for example, the amplitude is amplified by two times, that is, $T_{Color}[7] = 2$, a value of a marked 7$^{th}$ subcarrier element is changed to 2. Alternatively, if a phase of the 7$^{th}$ subcarrier element is changed, for example, the phase is rotated by 180°, that is, $T_{Color}[7] = e^{j\pi}$, a value of a marked 7$^{th}$ subcarrier element is changed to -1. Alternatively, if an amplitude and a phase of the 7$^{th}$ subcarrier element are changed, for example, the amplitude is amplified by two times and the phase is rotated by 180°, that is, $T_{Color}[7] = 2e^{j\pi}$, a value of a marked 7$^{th}$ subcarrier element is changed to -2.

In a possible case, the N subcarrier elements may be subcarrier elements with inconsecutive sequence numbers in the M subcarrier elements, for example, subcarrier elements with sequence numbers 8, 21, 23, 28, 32, and 50 in L[1, 64], that is, N=6. In this case, change of amplitude and phase of the N subcarrier elements may be the same, or may be different, or may be partially the same, or may be partially different. This is not specifically limited in this embodiment of this application.

In another possible case, the N subcarrier elements may alternatively include subcarrier elements with adjacent sequence numbers, for example, N=5, include subcarrier elements with sequence numbers 11, 12, 13, 26, and 51 in L[1, 64], or subcarrier elements with sequence numbers 11, 12, 13, 14, and 15 in L[1, 64]. In this case, amplitudes and phase change values of two subcarrier elements with adjacent sequence numbers are different. In other words, when amplitudes and phases of two subcarrier elements with adjacent sequence numbers are changed together, amplitude and phase change values may not be the same, but the two subcarrier elements with adjacent sequence numbers may be with a same amplitude but different phases, or may be with different amplitudes but a same phase, to facilitate subsequent identification. For example, amplitude and phase change values of subcarrier elements with sequence numbers 11 and 12 are different, and amplitude and phase change values of subcarrier elements with sequence numbers 12 and 13 are different, but amplitude and phase change values of subcarrier elements with sequence numbers 11 and 13 may be the same.

It should be noted that the second device may also mark the subcarrier elements in the entire L-LTF sequence, that is, change amplitudes and/or phases of the M subcarrier elements. In this case, amplitudes and phase change values of two subcarrier elements with adjacent sequence numbers may also be not the same. When a channel condition is good, the second device may also mark only one subcarrier element in the L-LTF sequence.

It may be understood that, during actual application, when a subcarrier element is selected for marking, a subcarrier element whose value is 0 needs to be avoided as much as possible, and it needs to be ensured that a peak-to-average power ratio (peak to average power ratio, PAPR) of a signal of the selected subcarrier element after marking processing is small enough. In addition, in an extreme case, an amplitude and phase change of the subcarrier element may be $T_{Color}[m] = 0$.

Further, the second device performs frequency-domain to time-domain transform on the marked L-LTF sequence, and adds a cyclic prefix (cyclic prefix, CP) to the L-LTF sequence, to form an L-LTF in the sent signal frame. The L-LTF includes two same orthogonal frequency division multiplexing (orthogonal frequency division multiplexing, OFDM) symbols.

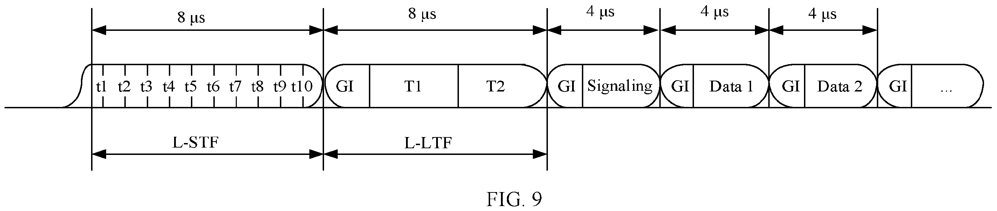

For example, FIG. 9 is a structural diagram of an OFDM training structure defined in the 802.11 2012 standard protocol. As shown in FIG. 9, the OFDM training structure includes an 8-μs L-STF, an 8-μs L-LTF, a 4-μs signaling field, and a data part. The L-LTF includes a 1.6-μs CP (namely, GI2) and two 3.2-μs OFDM symbols (namely, T1 and T2). T1 and T2 are two repeated signals obtained by performing frequency-domain to time-domain transform on the L-LTF sequence. In other words, T1 and T2 are obtained by performing frequency-domain to time-domain transform on a same L-LTF sequence twice. It may also be understood that T1 and T2 are obtained by performing frequency-domain to time-domain transform on two same L-LTF sequences. For formation of another time-domain waveform of the signal frame, refer to an existing implementation process. Details are not described in this embodiment of this application.

It may be learned that an L-LTF is used for fine frequency offset estimation and channel estimation. In this embodiment of this application, after the L-LTF sequence forming the L-LTF is colored or marked, the marked L-LTF sequence undergoes frequency-domain to time-domain transform twice, to form two repeated OFDM symbols, namely, T1 and T2. Therefore, a fine frequency offset estimation process is not affected. In addition, when a quantity of marked subcarrier elements is not large or mark manners are the same, the formed L-LTF has little impact on a PAPR of a signal. In addition, when the marked subcarrier element is selected, an appropriate subcarrier element may be found through searching, so that impact on the PAPR can be reduced to 1 dB to 2 dB.

It should be noted that, for each transmit end device, an unmarked L-LTF sequence used by the transmit end device to send service data is fixed; and for a receive end, the receive end also stores the unmarked L-LTF sequence of each transmit end device. In addition, unmarked L-LTF sequences that are allocated to different transmit end devices may be the same or may be different.

S802: The second device sends the signal frame to a first device. Correspondingly, the first device receives the signal frame from the second device.

The first device may be any terminal device or any network device shown in FIG. 7. The signal frame includes the L-LTF obtained by performing frequency-domain to time-domain transform on the marked L-LTF sequence. For a structure of a time-domain waveform of the signal frame, refer to the structure shown in FIG. 5 or FIG. 9. Details are not described herein again.

Correspondingly, the first device receives the signal frame. After capturing the signal frame on an air interface, the first device synchronizes to the signal frame, and enters a receiving procedure. However, the signal frame currently received synchronously may be a signal frame sent by another device, that is, the signal frame may not be the signal frame sent by the second device in S802. For example, there is the MIM problem shown in FIG. 4. Therefore, the first device needs to determine whether the currently received signal frame is a target service sent by a target device, that is, determine whether the currently received signal frame is the signal frame sent by the second device, so as to quickly identify whether the current signal frame is a target frame. For a case in which the currently received signal frame is not the target frame, receiving can be stopped in time, and re-capture for the target frame can be performed on the air interface. For a specific implementation process, refer to the following related descriptions in S803 and S804.

It may be understood that the sent signal frame is changed in a transmission process, for example, signal attenuation. That is, the received signal frame and the sent signal frame have a difference in power, but information carried in the received signal frame and the sent signal frame is unchanged.

S803: The first device performs channel estimation based on the L-LTF sequence corresponding to the signal frame, to obtain a first channel estimation value.

The first channel estimation value includes channel estimation values corresponding to M subcarrier elements in the L-LTF sequence corresponding to the currently received signal frame. In other words, the first channel estimation value includes M channel estimation values corresponding to the M subcarrier elements.

For example, in a process of receiving the signal frame, the first device parses the L-LTF in the signal frame, for example, performs time-domain to frequency-domain transform processing, to obtain an L-LTF sequence in the signal frame. Because there is signal attenuation, a value of a subcarrier element in the received L-LTF sequence is different from a value of a subcarrier element in the sent L-LTF sequence. Therefore, a value of a single subcarrier element in the L-LTF sequence obtained by the first device through parsing may be represented by the following formula: $y_{ltf}[m] = H1[m] * x_{ltf}[m]$

= $H1[m] * T_{Color}[m] * s_{LTF}[m]$, where

$H1[m]$ is an original channel estimation value of the $m^{th}$ subcarrier element, and the original channel estimation value may be understood as a channel estimation value corresponding to an unmarked subcarrier element, or a ratio of a received signal to a sent signal.

It may be understood that, before parsing the L-LTF, the first device first parses the L-STF. The L-STF may be used to implement functions such as signal detection, coarse frequency offset estimation, and symbol timing. For a specific implementation process, refer to existing related descriptions. Details are not described herein again.

Further, the first device then performs channel estimation by using the L-LTF sequence obtained through parsing, to obtain the first channel estimation value, where a process of obtaining a channel estimation value of any subcarrier element in the first channel estimation value may be implemented by using the following formula:

$$y_{ltf}[m] * s_{LTF}[m] = H1[m] * T_{Color}[m] * s_{LTF}[m] * s_{LTF}[m] \xrightarrow{s_{LTF}[m]*s_{LTF}[m]=1} H1[m] * T_{Color}[m].$$

That is, the channel estimation value corresponding to any subcarrier element (the $m^{th}$ subcarrier element) in the first channel estimation value is:

$$H2[m] = H1[m] * T_{Color}[m].$$

It may be learned that, if an amplitude and/or a phase of the subcarrier element are/is changed, a same change to the amplitude and/or the phase also occurs in the channel estimation value corresponding to the subcarrier element. That is, a channel estimation value of a marked subcarrier element in the first channel estimation value is the same as an original channel estimation value.

It should be noted that the channel estimation value may be a channel estimation amplitude value, or may be a channel estimation phase value, or may be a channel estimation complex value (including a channel estimation amplitude value and a channel estimation phase value).

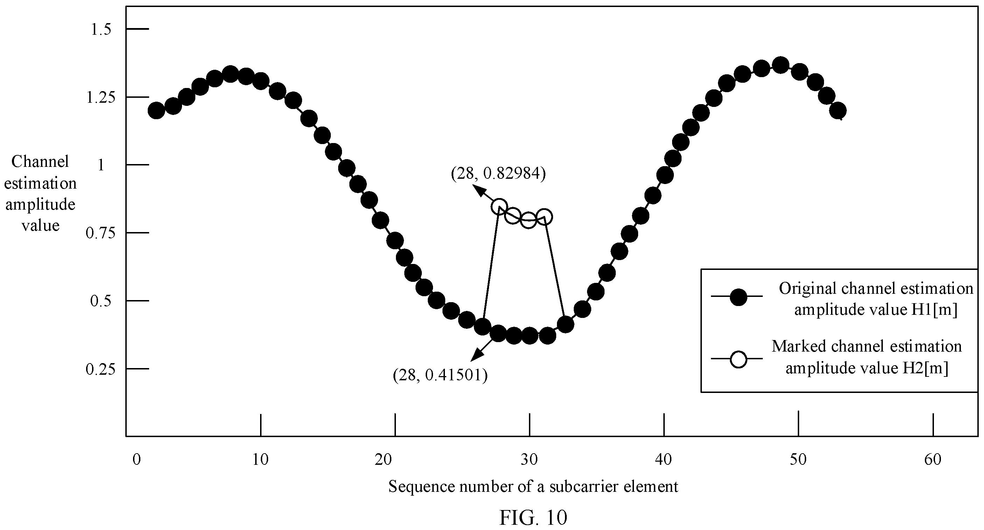

For example, if the second device changes amplitudes of $28^{th}$ to $31^{st}$ subcarrier elements in the L-LTF sequence, for example, the amplitudes are amplified by two times, that is, $T_{Color}[28] = T_{Color}[29] = T_{Color}[30] = T_{Color}[31] = 2$, the first device performs channel estimation on the L-LTF sequence, and an obtained first channel estimation value is shown in FIG. 10. Channel estimation values of the $28^{th}$ to $31^{st}$ subcarrier elements in the L-LTF sequence are also correspondingly changed to twice original channel estimation values. If an original channel estimation amplitude value of the $28^{th}$ subcarrier element is 0.41501, a marked channel estimation amplitude value is 0.82984. In this case, the channel estimation value is the channel estimation amplitude value.

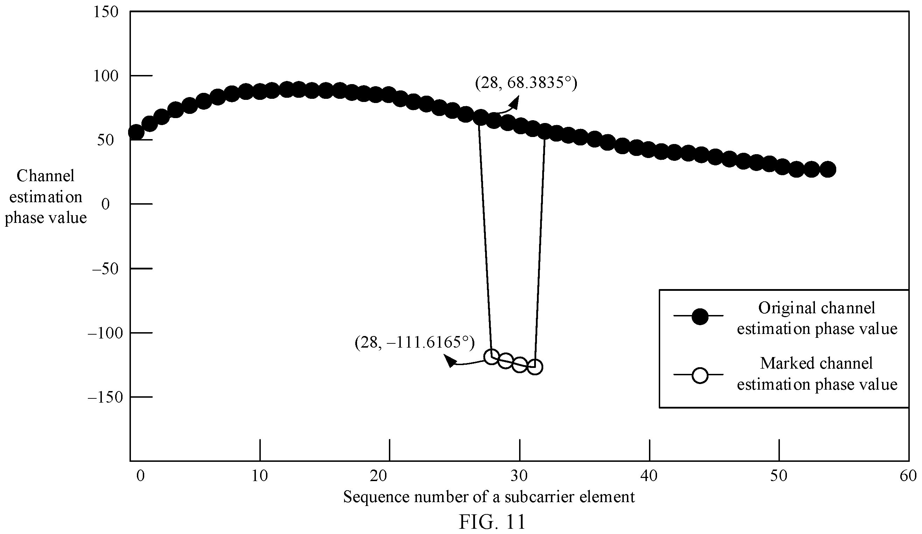

For another example, if the second device changes phases of $28^{th}$ to $31^{st}$ subcarrier elements in the L-LTF sequence, for example, the phases are rotated by 180°, that is, $T_{Color}[28] = T_{Color}[29] = T_{Color}[30] = T_{Color}[31] = e^{j\pi} = -1$, the first device performs channel estimation on the L-LTF sequence, and an obtained first channel estimation value is shown in FIG. 11. Channel estimation values of the $28^{th}$ to $31^{st}$ subcarrier elements in the L-LTF sequence are also rotated by 180° compared with original channel estimation values. If an original channel estimation phase value of the $28^{th}$ subcarrier element is 68.3825°, a marked channel estimation phase value is -111.6165°. In this case, the channel estimation value is the channel estimation phase value.

It should be noted that, for a subcarrier element whose value is 0, a channel estimation value corresponding to the subcarrier element is also 0. Therefore, in the first channel estimation value shown in FIG. 10 and FIG. 11, the channel estimation value whose subcarrier element is 0 is not shown.

In addition, FIG. 10 and FIG. 11 are used to describe a relationship between a channel estimation value and an amplitude and/or phase change of a subcarrier element. During actual application, in subcarrier elements with consecutive sequence numbers, when amplitudes and phases of subcarrier elements with adjacent sequence numbers are changed at the same time, amplitude and phase change values need to be different. For example, when only amplitudes of $28^{th}$ to $31^{st}$ subcarrier elements are changed, amplitude change values of the $28^{th}$ and $29^{th}$ subcarrier elements, or the $29^{th}$ and $30^{th}$ subcarrier elements, or the $30^{th}$ and $31^{st}$ subcarrier elements need to be different.

It may be understood that, when the phase and the amplitude are changed at the same time, correspondingly obtained channel estimation values are channel estimation complex values.

S804: The first device determines, based on the first channel estimation value and mark information of the N subcarrier elements, whether the L-LTF sequence corresponding to the signal frame is a target L-LTF sequence.

The mark information of the N subcarrier elements includes sequence numbers of the N subcarrier elements and amplitude and/or phase change values corresponding to the N subcarrier elements, namely, mark information of the L-LTF sequence marked by the second device. The target L-LTF sequence is the L-LTF sequence corresponding to the signal frame sent by the second device.

The mark information of the N subcarrier elements may be obtained through pre-negotiation or preconfiguration between the first device and the second device. For example, when the first device is a network device and the second device is a terminal device, or when the first device is a terminal device and the second device is a network device, when the terminal device is associated with the network device, the terminal device may add the mark information of the N subcarrier elements to an association frame, or the terminal device may obtain the mark information from a beacon (beacon) frame delivered by the network device, or the network device may send the mark information of the N subcarrier elements to the terminal device by using a newly added Wi-Fi 6 trigger frame. A negotiation manner of the mark information of the N subcarrier elements is not specifically limited in this embodiment of this application.

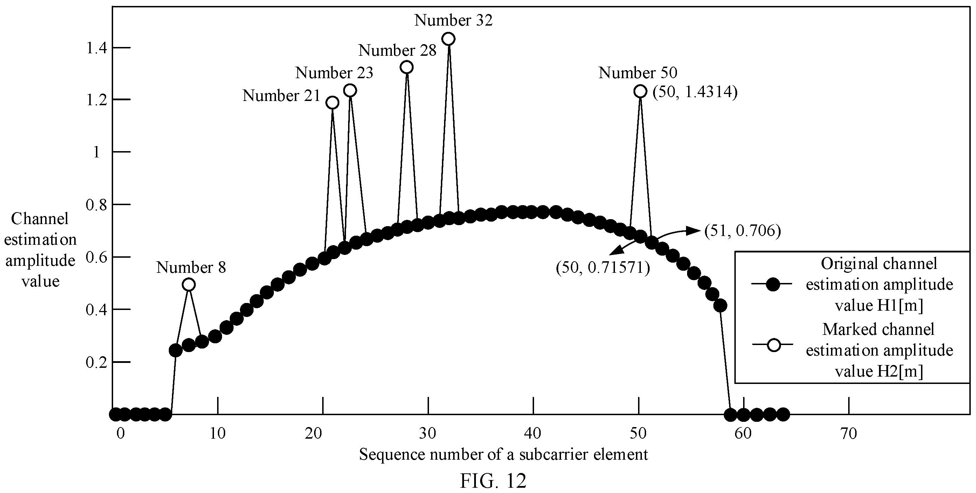

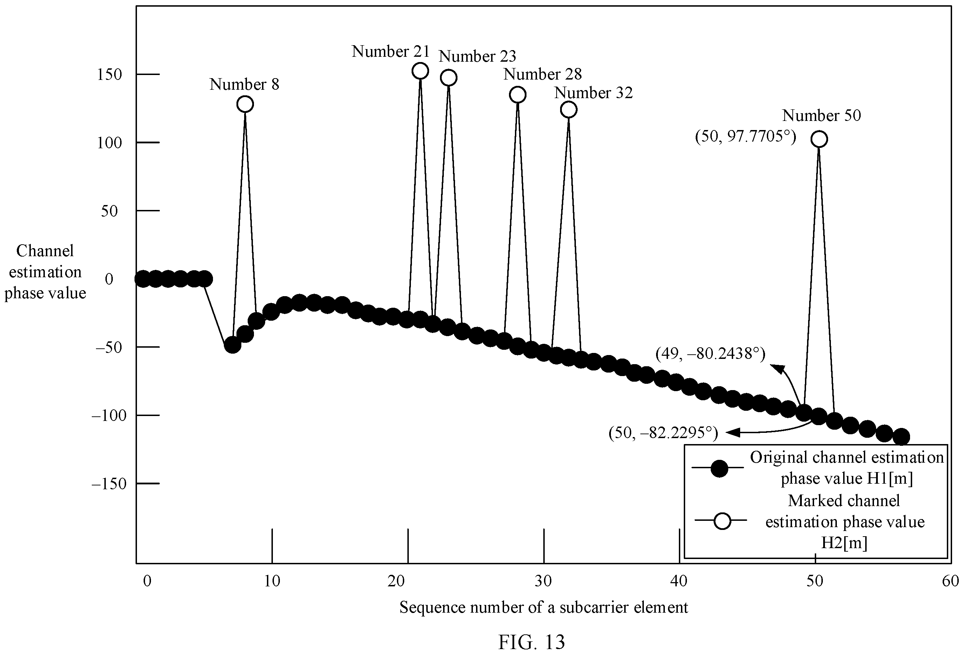

Based on a Wi-Fi channel feature, channel estimation amplitude values and channel estimation phase values of adjacent subcarrier elements in the unmarked L-LTF sequence are almost consecutive or almost equal. As shown in FIG. 12, a channel estimation amplitude value of a subcarrier element 50 is 0.71571, a channel estimation amplitude value of a subcarrier element 51 is 0.706, and a difference between the channel estimation amplitude values of the two subcarrier elements is very small. This is also true for a channel estimation amplitude value of a subcarrier element 49 and the channel estimation amplitude value of the subcarrier element 50. As also shown in FIG. 13, a channel estimation phase value of a subcarrier element 50 is -82.2295°, a channel estimation phase value of a subcarrier element 49 is -80.2438°, and a difference between the channel estimation phase values of the two subcarrier elements is also very small. This is also true for the channel estimation phase value of the subcarrier element 50 and a channel estimation phase value of a subcarrier element 51. Therefore, the first device may determine, based on the channel estimation value, the L-LTF sequence corresponding to the signal frame.

In addition, it may be learned from FIG. 12 and FIG. 13 that channel estimation amplitude values and channel estimation phase values of at least two subcarrier elements with consecutive sequence numbers are basically equal. Therefore, in this embodiment of this application, a subcarrier element whose sequence number is adjacent to that of the $m^{th}$ subcarrier element may be a subcarrier element whose channel estimation amplitude value and channel estimation phase value are in a very small difference from or almost equal to those of the $m^{th}$ subcarrier element and whose sequence number is in a difference of at least 1 from that of the $m^{th}$ subcarrier element. For example, the subcarrier element adjacent to the subcarrier element 50 may be any subcarrier element in 48 to 52 subcarrier elements. This is not specifically limited in this embodiment of this application. It may be understood that, a channel estimation amplitude value and a channel estimation phase value of a subcarrier element whose sequence number is in a difference of 1 from that of the $m^{th}$ subcarrier element are closest to the channel estimation amplitude value and the channel estimation phase value of the $m^{th}$ subcarrier element. For ease of description, in the following embodiments, the subcarrier element whose sequence number is in a difference of 1 from that of the $m^{th}$ subcarrier element is used as an adjacent subcarrier element for description.

When a channel condition is good, in a possible design solution, the first device may determine, based on the first channel estimation value, whether there is an abruptly changed channel estimation value in the first channel estimation value, and determine whether a sequence number of a subcarrier element corresponding to the abruptly changed channel estimation value is the same as the sequence numbers of the N subcarrier elements. If the sequence number of the subcarrier element corresponding to the abruptly changed channel estimation value is the same as the sequence numbers of the N subcarrier elements, the first device may determine that the L-LTF sequence is the target L-LTF sequence, and therefore may continue to receive the signal frame corresponding to the L-LTF sequence. If the sequence number of the subcarrier element corresponding to the abruptly changed channel estimation value is different from the sequence numbers of the N subcarrier elements, the first device may determine that the L-LTF sequence is not the target L-LTF sequence, and therefore immediately stop and end receiving of the current signal frame, reset all receiving modules, and re-receive an air interface signal until the target frame is received.

Alternatively, the first device may determine, based on whether a channel estimation value corresponding to a first subcarrier element is abruptly changed in the first channel estimation value, and the first subcarrier element is a subcarrier element, in the L-LTF sequence corresponding to the signal frame, whose sequence number corresponds to the sequence numbers of the N subcarrier elements. If a channel estimation value corresponding to each subcarrier element in the first subcarrier element is abruptly changed, it may be determined that the L-LTF sequence is the target L-LTF, and the first device may continue to receive the signal frame corresponding to the L-LTF sequence. If the channel estimation value corresponding to each subcarrier element in the first subcarrier element is not abruptly changed or is partially changed, it may be determined that the L-LTF sequence is not the target L-LTF, and the first device immediately stops and ends receiving of the current signal frame, resets all receiving modules, and re-receives an air interface signal until the target frame is received.

For example, the sequence numbers of the N subcarrier elements are 8, 21, 23, 28, 32, and 50, that is, N=6, amplitudes of the six subcarrier elements are amplified by two times, and phases are rotated by 180°, that is, $T_{Color}[m] = 2e^{j\pi} = -2$, where m=8, 21, 23, 28, 32 50. The first device determines subcarrier elements whose sequence numbers are 8, 21, 23, 28, 32, 50 in the L-LTF sequence corresponding to the currently received signal frame as the first subcarrier element, that is, the first subcarrier element is the subcarrier elements whose sequence numbers are {8, 21, 23, 28, 32, 50}.

If the channel estimation value of the first subcarrier element in the L-LTF sequence corresponding to the currently received signal frame suddenly is abruptly changed as shown in FIG. 12 and FIG. 13, it may be determined that the L-LTF sequence corresponding to the signal frame is the target L-LTF.

In another possible design solution, the first device may determine, by using the following steps 1 and 2, whether the L-LTF sequence corresponding to the signal frame is the target L-LTF sequence.

Step 1: The first device may determine a first subcarrier element and a second subcarrier element based on the sequence numbers of the N subcarrier elements, where the first subcarrier element is a subcarrier element, in the L-LTF sequence corresponding to the signal frame, whose subcarrier element sequence number corresponds to the sequence numbers of the N subcarrier elements, and the second subcarrier element is a subcarrier element, in the L-LTF sequence corresponding to the signal frame, whose subcarrier element sequence number is adjacent to the sequence numbers of the N subcarrier elements.

For example, the sequence numbers of the N subcarrier elements are 8, 21, 23, 28, 32, and 50, that is, N=6, amplitudes of the six subcarrier elements are amplified by two times, and phases are rotated by 180°, that is, $T_{Color}[m] = 2e^{j\pi} = -2$, where m=8, 21, 23, 28, 32 50. The first device determines subcarrier elements whose sequence numbers are 8, 21, 23, 28, 32, and 50 in the L-LTF sequence corresponding to the currently received signal frame as the first subcarrier element, that is, the first subcarrier element is the subcarrier elements whose sequence numbers are {8, 21, 23, 28, 32, 50}. In addition, the first device determines, as the second subcarrier element, subcarrier elements whose sequence numbers are adjacent to 8, 21, 23, 28, 32, and 50 in the L-LTF sequence corresponding to the currently received signal frame. A subcarrier element adjacent to 8, 21, 23, 28, 32, and 50 in the L-LTF sequence corresponding to the currently received signal frame may be a corresponding subcarrier element with a previous sequence number or a corresponding subcarrier element with a next sequence number. For example, the second subcarrier element is a subcarrier element with a sequence number {7, 20, 22, 27, 31, 49}, or a subcarrier element with a sequence number {9, 22, 24, 29, 33, 51}, or a subcarrier element with a sequence number {7, 22, 24, 27, 31, 49}. This is not specifically limited in this embodiment of this application.

Step 2: The first device may determine, based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence.

In a possible case, the first device may divide each channel estimation value in the channel estimation value corresponding to the first subcarrier element by $T_{Color}[m]$, that is, perform de- mark or color-fading processing on the first subcarrier element based on the amplitude and/or phase change values corresponding to the N subcarrier elements, which may be represented as $V1[m] = \frac{H2[m]}{T_{color}(m)}$ , where m=8, 21, 23, 28, 32, 50. The first device may determine whether $V1[m]$ corresponding to each subcarrier element in the first subcarrier element is basically equal to a channel estimation value of each subcarrier element in the second subcarrier element, to determine whether the L-LTF sequence corresponding to the signal frame is the target L-LTF sequence.

For example, the second subcarrier element is a subcarrier element whose sequence number is {7, 20, 22, 27, 31, 49}, and the channel estimation value of each subcarrier element in the second subcarrier element is represented as $H2[m \pm 1]$, where $m \pm 1$=7, 20, 22, 27, 31, 49. The first device compares $V1[m]$ with $H2[m \pm 1]$, to determine whether the L-LTF sequence corresponding to the signal frame is the target L-LTF sequence.

When V1[8] and $H2$[7], V1[21] and $H2$[20], $V1$[23] and $H2$[22], V1[28] and $H2$[27], $V1$[32] and $H2$[31], and V1[50] and $H2$[49] are basically equal or basically consistent, the first device may determine that the L-LTF sequence corresponding to the current signal frame is the target L-LTF sequence.

When V1[8] and $H2$[7], V1[21] and $H2$[20], $V1$[23] and $H2$[22], $V1$[28] and $H2$[27], $V1$[32] and $H2$[31], and $V1$[50] and $H2$[49] are partially consistent or completely different, the first device may determine that the L-LTF sequence corresponding to the current signal frame is not the target L-LTF sequence.

In another possible case, the first device may determine a second channel estimation value based on the channel estimation value corresponding to the first subcarrier element, the channel estimation value corresponding to the second subcarrier element, and the amplitude and/or phase change values corresponding to the N subcarrier elements, where the second channel estimation value satisfies the following first relationship: $f_2 = \sum_{i=1}^{N}(\frac{f_{11}(i)}{T_{color}(i)} \times e^{j\pi} + F_{f_{12}}(i))$.

When an absolute value of the second channel estimation value is less than a first threshold, the first device may determine that the L-LTF sequence corresponding to the signal frame is the target L-LTF sequence; or when an absolute value of the second channel estimation value is greater than or equal to the first threshold, the first device may determine that the L-LTF sequence corresponding to the signal frame is not the target L-LTF sequence.

When a sequence number of an $i^{th}$ subcarrier element in the second subcarrier element is different from a sequence number of a subcarrier element in the N subcarrier elements, $F\_f_{12}(i) = f_{12}(i)$; or when a sequence number of an

$i^{th}$ subcarrier element in the second subcarrier element is the same as a sequence number of a subcarrier element in the N subcarrier elements, $F\_f_{12}(i) = \frac{f_{12}(i)}{T_{color}(\cdot)}$, where $f_2$ is the second channel estimation value, $f_{11}(i)$ is a channel estimation value corresponding to an $i^{th}$ subcarrier element in the first subcarrier element, $T_{color}(i)$ is an amplitude and/or phase change value corresponding to an $i^{th}$ subcarrier element in the N subcarrier elements, $f_{12}(i)$ is a channel estimation value corresponding to the $i^{th}$ subcarrier element in the second subcarrier element, $T_{color}(\cdot)$ is an amplitude and/or phase change value corresponding to a subcarrier element, in the N subcarrier elements, whose sequence number is the same as that of the $i^{th}$ subcarrier element in the second subcarrier element, a sequence number of the $i^{th}$ subcarrier element in the first subcarrier element is the same as a sequence number of the $i^{th}$ subcarrier element in the N subcarrier elements, the $i^{th}$ subcarrier element in the second subcarrier element is a subcarrier element whose sequence number is adjacent to that of the $i^{th}$ subcarrier element in the N subcarrier elements, i is a positive integer, and $1 \leq i \leq N$.

For example, if the sequence numbers of the N subcarrier elements are 8, 21, 23, 28, 32, and 50, $T_{Color}[m] = 2e^{j\pi} = -2$, the first subcarrier element is a subcarrier element whose sequence number is {8, 21, 23, 28, 32, 50}, and the second subcarrier element is a subcarrier element whose sequence number is {7, 20, 22, 27, 31, 49}, $1 \leq i \leq 6$. Correspondingly, $f_{11}(i)$ is a channel estimation value corresponding to an $i^{th}$ subcarrier element in {8, 21, 23, 28, 32, 50}. For example, $f_{11}(1)$ is a channel estimation value corresponding to the subcarrier element 8, $f_{11}(2)$ is a channel estimation value corresponding to the subcarrier element 21, and so on. $T_{color}(i)$ is an amplitude and/or phase change value corresponding to an $i^{th}$ subcarrier element in {8, 21, 23, 28, 32, 50}. For example, $T_{color}(1)$ is an amplitude and/or phase change value corresponding to the subcarrier element 8, that is, $T_{color}(1) = T_{Color}[8] = -2$; $T_{color}(2)$ is an amplitude and/or phase change value corresponding to the subcarrier element 21, that is, $T_{color}(2) = T_{Color}[21] = -2$; and so on. $\frac{f_{11}(i)}{T_{color}(i)} \times e^{j\pi}$ represents an opposite number of a corresponding channel estimation value obtained after the $i^{th}$ subcarrier element in the first subcarrier element is de-marked.

In this case, because a sequence number of a subcarrier element in the second subcarrier element is different from a sequence number of a subcarrier element in the N subcarrier elements, $F_{f_{12}}(i) = f_{12}(i)$, where $f_{12}(i)$ is a value of an $i^{th}$ subcarrier element in {7, 20, 22, 27, 31, 49}. For example, $f_{12}(1)$ is a channel estimation value corresponding to the subcarrier element 7, $f_{12}(2)$ is a channel estimation value corresponding to the subcarrier element 20, and so on.

It should be noted that, in a case of $F\_f_{12}(i) = \frac{f_{12}(i)}{T_{color}(\cdot)}$, the N subcarrier elements include subcarrier elements with consecutive sequence numbers, so that there are subcarrier elements with same sequence numbers as those of the N subcarrier elements in the second subcarrier element.

It may be understood that, when $\frac{f_{11}(i)}{T_{color}(i)} \times e^{j\pi} + f_{12}(i)$ is a value close to 0, it may be determined that the subcarrier element is a marked subcarrier element. Therefore, the second channel estimation value $f_2$ obtained by summing N formulas $\frac{f_{11}(i)}{T_{color}(i)} \times e^{j\pi} + f_{12}(i)$ also needs to be a value close to 0. The second channel estimation value $f_2$ may be a positive value, a negative value, or a complex value.

In this case, the first device may obtain the absolute value of the second channel estimation value $f_2$, that is $|f_2|$, and may set the first threshold based on a channel state. When $|f_2|$ is less than the first threshold, the first device may determine that the L-LTF sequence corresponding to the currently received signal frame is the target L-LTF sequence. On the contrary, the L-LTF sequence is not the target L-LTF sequence.

In still another possible design solution, the first device may also determine, based on a channel estimation value of a subcarrier element whose sequence number corresponds to the sequence numbers of the N subcarrier elements and the amplitude and/or phase change values corresponding to the N subcarrier elements in the first channel estimation value, whether the L-LTF sequence corresponding to the signal frame is the target L-LTF sequence. For example, the first device may compensate for the first channel estimation value, and then compare, based on the amplitude and/or phase change values corresponding to the N subcarrier elements, the channel estimation value of the subcarrier element whose sequence number corresponds to the sequence numbers of the N subcarrier elements in the compensated first channel estimation value with values of the N subcarrier elements in the known L-LTF sequence (for example, specified in a standard, or determined by a transmit end and a receive end through negotiation and communication). If a difference or a ratio between the two values is within a threshold range, it may be determined whether the L-LTF sequence corresponding to the current signal frame is the target L-LTF sequence. That is, the first device may compare, based on the amplitude and/or phase change values corresponding to the N subcarrier elements, the compensated channel estimation value of the subcarrier element whose sequence number corresponds to the sequence numbers of the N subcarrier elements with the values of the N subcarrier elements in the L-LTF sequence corresponding to the signal frame sent by the second device, to identify whether the current signal is the target frame.

It should be noted that, when a channel condition is poor or a signal-to-noise ratio is low, on a basis of determining the second channel estimation value, the first device may further determine a third channel estimation value based on the channel estimation value corresponding to the first subcarrier element, the channel estimation value corresponding to the second subcarrier element, and the amplitude and/or phase variation values corresponding to the N subcarrier elements,

$$f_3 = \sum_{i=1}^{N}\left(\frac{f_{11}(i)}{T_{color}(i)} + F_{f_{12}}(i)\right)$$

where the third channel estimation value satisfies the following third relationship: . The third channel estimation value $f_3$ may be understood as being obtained by de-marking a subcarrier element that is considered to be marked in the L-LTF sequence corresponding to the current signal frame, obtaining an original channel estimation value of the marked subcarrier element, and adding and summing up the original channel estimation value and a channel estimation value of an adjacent subcarrier element. Based on this manner, signal identification reliability and accuracy can be further improved.

It may be understood that, when the L-LTF sequence corresponding to the current signal frame is the target L-LTF sequence, $\frac{f_{11}(i)}{T_{color}(i)} + F_{f_{12}}(i)$ needs to be a sum of two values whose phases are the same and whose amplitudes are equal. Therefore, the first device may determine, based on the second channel estimation value and the third channel estimation value, whether the L-LTF sequence corresponding to the signal frame is the target L-LTF sequence.

For example, when a ratio $\frac{|f_2|}{|f_3|}$ of an absolute value $|f_2|$ of the second channel estimation value to an absolute value $|f_3|$ of the third channel estimation value is less than a second threshold, the first device may determine that the L-LTF sequence corresponding to the signal frame is the target L-LTF sequence. On the contrary, when a ratio of an absolute value of the second channel estimation value to an absolute value of the third channel estimation value is greater than or equal to the second threshold, the first device may determine that the L-LTF sequence corresponding to the signal frame is not the target L-LTF sequence.

The second threshold is a threshold greater than 0 and less than 1. A value of the second threshold may be set based on a channel state, a device computing capability, an application scenario, and the like. This is not specifically limited in this embodiment of this application.

Based on the foregoing steps S801 to S804, when it is determined that the L-LTF sequence corresponding to the signal frame is the target L-LTF sequence, the first device may determine the signal frame as the target frame, to continue to receive the signal frame. On the contrary, when it is determined that the L-LTF sequence corresponding to the signal frame is not the target L-LTF sequence, the first device may determine that the signal frame is a non-target frame, to immediately stop and end receiving of the current signal frame, reset all receiving modules, and re-receive an air interface signal. In this case, if the target frame overlaps with the non-target frame, the signal frame on the air interface may be re-received in time, so that the target frame can be quickly captured, and omission of the target frame can be avoided, thereby quickly synchronizing the target frame for receiving.

It should be noted that, when the receive end is a plurality of antennas, each receive antenna may identify a signal based on related descriptions in S803 and S804, and an "or" operation may be performed on an identification result of each receive antenna, to determine whether the target signal is received. In other words, provided that one antenna determines the target signal, the receive end may denote the signal as the target signal.

Based on the signal identification method shown in FIG. 8, the second device may identify a manner of marking the amplitude and/or phase change of the subcarrier element in the L-LTF sequence, so that the first device may identify, based on the mark information of the subcarrier element in the target L-LTF sequence, the mark manner of the subcarrier element in the L-LTF sequence corresponding to the currently received signal frame, and may identify whether the current L-LTF sequence is the target L-LTF sequence marked by the target device in the particular mark manner, to identify more quickly or earlier whether the current signal frame is a target frame. In a case of signal overlapping, receiving of a non-target frame is ended in time, and receiving of the target frame is restarted in advance, so that a signal packet loss rate can be reduced, and signal receiving reliability can be improved.

The following describes in detail the signal identification manner provided in embodiments of this application with reference to application scenarios.

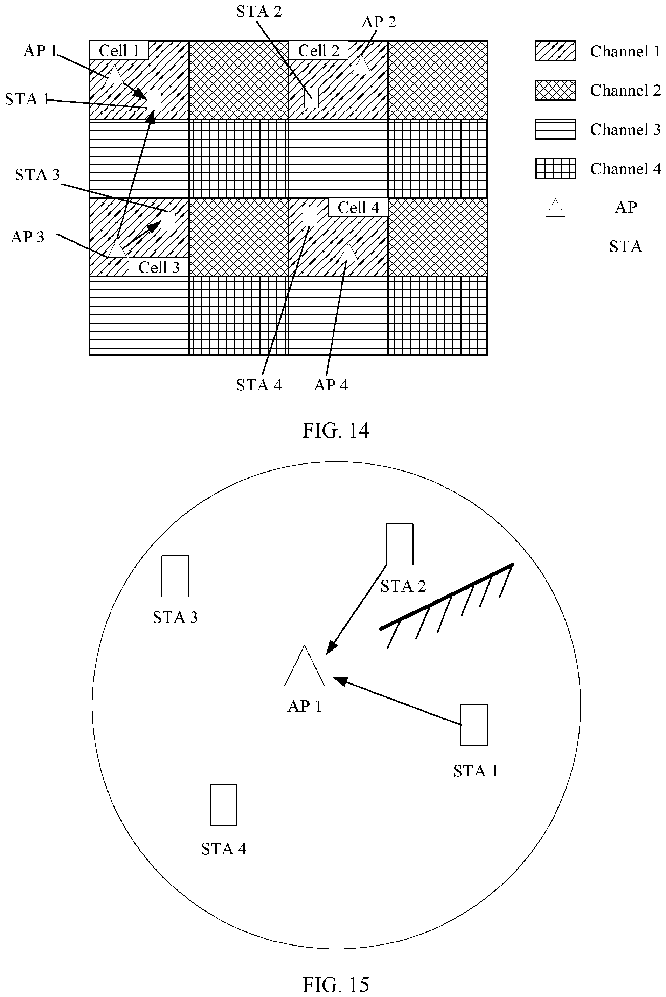

For example, the signal identification method provided in embodiments of this application may be applied to a diagram of an intra-frequency cell deployment scenario shown in FIG. 14, and may be used to identify signals in intra-frequency cells. As shown in FIG. 14, in this scenario, four channels, namely, channels 1 to 4, are deployed based on Wi-Fi. Cells of a same frequency use a same channel for transmission. There are four intra-frequency cells using a same channel. Each intra-frequency cell corresponds to one AP. For example, intra-frequency cells using the channel 1 include cells 1 to 4, and correspond to APs 1 to 4. Cells of different frequencies do not affect each other. For example, signals sent by cells using the channels 2 to 4 do not affect signals sent by the cells using the channel 1.

The first device is a STA 1 in the cell 1, and the second device is the AP 1 in the cell 1. In a process of sending a signal to the STA 1, the AP 1 receives a signal sent by the AP or the STA in any one of the cells 2 to 4, and consecutively MIM is formed. In this case, the STA 1 may identify the L-LTF sequence corresponding to the received signal frame, and determine whether a signal frame is from the AP 1, to distinguish between signals from different intra-frequency cells.

For example, a 20 MHz bandwidth is used as an example. The APs (the APs 1 to 4) to which the cells 1 to 4 belong send signals by using L[1, 64] as an L-LTF sequence in S801. For a same L-LTF sequence, the APs 1 to 4 are marked by using subcarrier elements shown in Table 1. Each AP chooses to mark six subcarrier elements in L[1, 64], sequence numbers of the selected six subcarrier elements are inconsecutive, and sequence numbers of subcarrier elements selected and marked between the four APs do not overlap. For example, the AP 1 selects a subcarrier element whose sequence number is {8, 21, 23, 28, 32, 50} in L[1, 64] for marking, and the AP 2 selects a subcarrier element whose sequence number is {13, 15, 25, 42, 44, 58} in L[1, 64] for marking.

In addition, the APs 1 to 4 all use a same mark manner to mark the selected subcarrier element. For example, the mark manner is that an amplitude is amplified by two times and a phase is rotated by 180°, that is, $T_{color}[m] = 2 * e^{j\pi} = -2$. For the AP 1, a value of m is 8, 21, 23, 28, 32, or 50. In this case, N=6, and the mark information of the N subcarrier elements may include sequence numbers {8, 21, 23, 28, 32, 50} of six subcarrier elements and amplitude and/or phase change values $T_{color}[m] = -2$ of the six subcarrier elements.

Table 1

| AP 1 | AP 2 | AP 3 | AP 4 |
|------|------|------|------|
| 8 | 13 | 10 | 19 |
| 21 | 15 | 17 | 30 |
| 23 | 25 | 37 | 35 |
| 28 | 42 | 39 | 46 |
| 32 | 44 | 52 | 48 |
| 50 | 58 | 55 | 57 |

It may be understood that, because the L-LTF sequence L[1, 64] includes 64 subcarrier elements, when each AP selects a same quantity of subcarrier elements for marking, a quantity of intra-frequency cells at a frequency to which the AP belongs and whether sequence numbers of subcarrier elements selected by different APs overlap need to be considered, so that a quantity of selected subcarrier elements satisfies a requirement.

If the AP 1 sends a signal frame to the STA 1, the AP 1 needs to perform marking processing on a subcarrier element whose sequence number is {8, 21, 23, 28, 32, 50} in the L-LTF sequence by amplifying an amplitude by two times and by rotating a phase by 180°, and then send, to the STA 1, the signal frame formed by the marked L-LTF sequence, namely, a target frame. The subcarrier element whose sequence number is {8, 21, 23, 28, 32, 50} may be referred to as a target subcarrier element.

Further, the STA 1 may parse the currently received signal frame to obtain the L-LTF sequence corresponding to the current signal frame, perform channel estimation by using the L-LTF sequence obtained through parsing, to obtain a first channel estimation value, and determine, based on mark information of the six subcarrier elements of the AP 1 and the first channel estimation value, whether the marked subcarrier element is the subcarrier element whose sequence number is {8, 21, 23, 28, 32, 50}.

When a channel condition is good, in a possible case, the STA 1 may determine, based on the first channel estimation value, whether there is an abruptly changed channel estimation value in the first channel estimation value, and determine whether a sequence number of a subcarrier element corresponding to the abruptly changed channel estimation value is a sequence number of the target subcarrier element. If the sequence number of the subcarrier element corresponding to the abruptly changed channel estimation value is the sequence number of the target subcarrier element, for example, the abruptly changed channel estimation value in the first channel estimation value is shown in FIG. 12 and FIG. 13, the STA 1 may determine that the L-LTF sequence corresponding to the current signal frame is the target L-LTF sequence. If the sequence number of the subcarrier element corresponding to the abruptly changed channel estimation value is not the sequence number of the target subcarrier element, for example, the STA 1 determines that the sequence number of the subcarrier element corresponding to the abruptly changed channel estimation value in the first channel estimation value is {13, 15, 25, 42, 44, 58}, and does not match the subcarrier element whose sequence number is {8, 21, 23, 28, 32, 50}, the STA 1 may determine that the L-LTF sequence corresponding to the current signal frame is not the target L-LTF sequence.

Further, when the STA 1 determines that the sequence number of the subcarrier element corresponding to the abruptly changed channel estimation value is the target subcarrier element, the STA 1 may further divide the abruptly changed channel estimation value by an amplitude and/or phase change value of the target subcarrier element, to obtain an unmarked channel estimation value, compare the channel estimation value with a channel estimation value, of a subcarrier element, that is adjacent to the channel estimation value, for example, a channel estimation value of a subcarrier element whose sequence number is {7, 20, 22, 27, 31, 49}, and determine whether the obtained unmarked channel estimation value is consistent with the channel estimation value of the adjacent subcarrier element. For a specific identification process, refer to related descriptions in step S803. Details are not described herein again.

In another possible case, the STA 1 may search, based on the sequence number of the target subcarrier element, the first channel estimation value for a channel estimation value (namely, a channel estimation value corresponding to a first subcarrier element) of a subcarrier element whose sequence number is the same as that of the target subcarrier element, for example, {$f_{11}(1) = H2[8]$, $f_{11}(2) = H2[21]$, $f_{11}(3) = H2[23]$, $f_{11}(4) = H2[28]$, $f_{11}(5) = H2[32]$, and $f_{11}(6) = H2[50]$}, and a channel estimation value (namely, a channel estimation value corresponding to a second subcarrier element) of a subcarrier element whose sequence number is adjacent to that of the target subcarrier element, for example, {$f_{12}(1) = H2[7]$, $f_{12}(2) = H2[20]$, $f_{12}(3) = H2[22]$, $f_{12}(4) = H2[27]$, $f_{12}(5) = H2[31]$, and $f_{12}(6) = H2[49]$}. Then, a value obtained by dividing the channel estimation value of the subcarrier element whose sequence number of the target subcarrier element by the amplitude and/or phase change value of the target subcarrier element is separately compared with the channel estimation value of the subcarrier element whose sequence number is adjacent to that of the target subcarrier element, as follows:

$$\text{If } \frac{H2[8]}{T_{color}(1)} \approx H2[7], \ \frac{H2[21]}{T_{color}(2)} \approx H2[20], \ \frac{H2[23]}{T_{color}(3)} \approx H2[22], \ \frac{H2[28]}{T_{color}(4)} \approx H2[27], \ \frac{H2[32]}{T_{color}(5)} \approx H2[31], \text{ and}$$

$$\frac{H2[50]}{T_{color}(6)} \approx H2[49], \text{ where}$$

$T_{color}(1) = T_{color}(2) = T_{color}(3) = T_{color}(4) = T_{color}(5) = T_{color}(6) = T_{color}[m] = -2$, it may be determined that the L-LTF sequence corresponding to the current signal frame is the target L-LTF sequence.

On the contrary, the STA 1 may determine that the L-LTF sequence corresponding to the current signal frame is not the target L-LTF sequence.

In still another possible case, the STA 1 may determine a second channel estimation value, for example, $f_2 =$

$$\sum_{i=1}^{N}\left(\frac{f_{11}(i)}{T_{color}(i)} \times e^{j\pi} + F_{f_{12}}(i)\right) = \left(\frac{H2[8]}{T_{color}(1)} \times e^{j\pi} + H2[7]\right) + \left(\frac{H2[21]}{T_{color}(2)} \times e^{j\pi} + H2[20]\right) + \left(\frac{H2[23]}{T_{color}(3)} \times e^{j\pi} +$$

$$H2[22]\right) + \left(\frac{H2[28]}{T_{color}(4)} \times e^{j\pi} + H2[27]\right) + \left(\frac{H2[32]}{T_{color}(5)} \times e^{j\pi} + H2[31]\right) + \left(\frac{H2[50]}{T_{color}(6)} \times e^{j\pi} + H2[49]\right) \text{, based on the}$$

channel estimation value corresponding to the first subcarrier element, the channel estimation value corresponding to the second subcarrier element, and the amplitude and/or phase change value of the target subcarrier element.

It may be understood that, when the L-LTF sequence corresponding to the current signal frame is the target L-LTF sequence, that is, when a subcarrier element whose sequence number is {8, 21, 23, 28, 32, 50} in the L-LTF sequence corresponding to the current signal frame is the target subcarrier element, the second channel estimation value $f_2 \approx 0$. Otherwise, if the signal frame currently received by the STA 1 is a signal frame sent by the AP 2, the second channel estimation value $f_2$ is changed to a sum of co-directional amplitudes, and the second channel estimation value $f_2$ is greater than 0.

Further, the STA 1 may obtain an absolute value of the second channel estimation value $f_2$; and when $|f_2|$ is less than the first threshold, determine that the L-LTF sequence corresponding to the current signal frame is the target L-LTF sequence. On the contrary, the STA 1 may determine that the L-LTF sequence corresponding to the current signal frame is not the target L-LTF sequence. For a specific identification process, refer to related descriptions in steps S803 and S804. Details are not described herein again.

In still another possible case, for example, when a channel condition is poor or a signal-to-noise ratio is low, when determining the second channel estimation value, the STA 1 may further determine a third channel estimation value, for example,

$$f_3 = \sum_{i=1}^{N}\left(\frac{f_{11}(i)}{T_{color}(i)} + F_{f_{12}}(i)\right) = \left(\frac{H2[8]}{T_{color}(1)} + H2[7]\right) + \left(\frac{H2[21]}{T_{color}(2)} + H2[20]\right) + \left(\frac{H2[23]}{T_{color}(3)} +$$

$$H2[22]\right) + \left(\frac{H2[28]}{T_{color}(4)} + H2[27]\right) + \left(\frac{H2[32]}{T_{color}(5)} + H2[31]\right) + \left(\frac{H2[50]}{T_{color}(6)} + H2[49]\right) \text{, based on the channel estimation}$$

value corresponding to the first subcarrier element, the channel estimation value corresponding to the second subcarrier element, and the amplitude and/or phase change value of the target subcarrier element.

It may be understood that, if subcarrier elements whose sequence numbers are {8, 21, 23, 28, 32, 50} in the L-LTF sequence corresponding to the current signal frame are target subcarrier elements, the third channel estimation value $f_3$ needs to be a sum of positive amplitudes, for example, twice a sum of channel estimation values corresponding to subcarrier elements whose sequence numbers are {7, 20, 22, 27, 31, 49}. On the contrary, if the signal frame currently received by the STA 1 is a signal frame sent by the AP 2, the third channel estimation value $f_3$ is changed to reverse amplitude cancellation, for example, half of a sum of channel estimation values corresponding to subcarrier elements whose sequence numbers are {7, 20, 22, 27, 31, 49}.

Further, the STA 1 may perform determining by combining the second channel estimation value and the third channel estimation value. For example, the STA 1 performs determining based on a ratio $\frac{|f_2|}{|f_3|}$ of an absolute value $|f_2|$ of the second channel estimation value to an absolute value $|f_3|$ of the third channel estimation value. When $\frac{|f_2|}{|f_3|}$ is less than the second threshold, and a value of the second threshold is [0, 1], the STA 1 may determine that the L-LTF sequence corresponding to the current signal frame is the target L-LTF sequence. On the contrary, when $\frac{|f_2|}{|f_3|}$ is greater than the second threshold, the STA 1 may determine that the L-LTF sequence corresponding to the current signal frame is not the target L-LTF sequence. For a specific identification process, refer to related descriptions in steps S803 and S804. Details are not described herein again.

Based on any one of the foregoing determining processes, the STA 1 may determine, on a basis of determining whether the L-LTF sequence corresponding to the current signal frame is the target L-LTF sequence, whether the current signal frame is the target frame can be determined, so that whether to continue to receive the current signal frame can be determined. For example, when the STA 1 determines that the L-LTF sequence corresponding to the current signal frame is not the target L-LTF sequence, the STA 1 immediately stops receiving of the current signal frame, re-captures the air interface, and synchronizes the signal frame of the AP 1.

It may be understood that the STA 1 may also identify, based on the foregoing identification process, the signal frame sent by any one of the APs 2 to 4 or the STAs 2 to 4, and the APs 2 to 4 or the STAs 2 to 4 may also identify the target signal based on the foregoing identification process. Details are not described in this embodiment of this application.

It should be noted that, sequence numbers of subcarrier elements selected for different APs for marking shown in Table 1 do not overlap with each other. To distinguish between signals of more cells, subcarrier elements with some overlapped sequence numbers may be selected for different APs for marking. As shown in the following Table 2, subcarrier elements used by the AP 1 and the AP 2 for marking each include a subcarrier element 28, subcarrier elements used by the AP 2 and the AP 3 for marking each include subcarrier elements 17, 37, and 52, and subcarrier elements used by the AP 3 and the AP 4 for marking each include subcarrier elements 10 and 39.

Table 2

| AP 1 | AP 2 | AP 3 | AP 4 |
|------|------|------|------|
| 8    | 13   | 10   | 10   |
| 21   | 17   | 17   | 18   |
| 23   | 25   | 37   | 32   |
| 28   | 28   | 39   | 39   |
| 32   | 37   | 52   | 41   |
| 50   | 52   | 55   | 57   |

To distinguish between signals of more cells, different APs may select different quantities of subcarrier elements for marking. As shown in the following Table 3, a quantity of subcarrier elements used by the AP 1 for marking is 3, a quantity of subcarrier elements used by the AP 2 for marking is 4, a quantity of subcarrier elements used by the AP 3 for marking is 6, and a quantity of subcarrier elements used by the AP 4 for marking is 5.

Table 3

| AP 1 | AP 2 | AP 3 | AP 4 |
|------|------|------|------|
| 8    | 13   | 10   | 19   |
| 21   | 15   | 17   | 30   |
| 23   | 25   | 37   | 35   |
|      | 42   | 39   | 46   |
|      |      | 52   | 48   |

(continued)

| AP 1 | AP 2 | AP 3 | AP 4 |
|------|------|------|------|
|      |      | 55   |      |

In addition, when different APs use a same mark manner and use a large quantity of subcarrier elements whose sequence numbers overlap, misidentification may be caused. In this case, the different APs may mark the subcarrier elements in different mark manners, so that a signal identification degree is higher, a misjudgment is avoided, and more users can also be distinguished. For example, a manner in which the AP 1 marks the subcarrier element shown in Table 1, Table 2, or Table 3 is $T_{color}[m]$ = -2, a manner in which the AP 2 marks the subcarrier element shown in Table 1, Table 2, or Table 3 is $T_{color}[m] = -0.5 * e^{j\frac{\pi}{2}}$, a manner in which the AP 3 marks the subcarrier element shown in Table 1, Table 2, or Table 3 is $T_{color}[m] = e^{j\frac{\pi}{4}}$, and a manner in which the AP 4 marks the subcarrier element whose sequence number is shown in Table 1, Table 2, or Table 3 is $T_{color}[m] = \sqrt{2} * e^{j-\frac{\pi}{4}}$. In addition, for any AP, different mark manners may also be used for all selected subcarrier elements, or a same mark manner may be used for some subcarrier elements. This is not specifically limited in this embodiment of this application.

In the scenario shown in FIG. 14, APs to which different cells belong may use different particular mark manners for the L-LTF sequence, so that the STA may distinguish between signals from different cells based on mark manners corresponding to target signals.

The signal identification method provided in this embodiment of this application may also be applied to the scenario shown in FIG. 15, and may be used to distinguish between signals sent by different users in a same cell. As shown in FIG. 15, there are four different user equipments STA 1 to STA 4 in the cell to which the AP 1 belongs. Because there is also a problem of signal collision when user equipments in a same cell send signals, different users may also use different mark manners for the L-LTF sequences, to distinguish between signals. For a specific mark manner, refer to the mark manner of the AP 1 to the AP 4 in the scenario in FIG. 13. Details are not described herein again.

For example, the STA 1 and the STA 2 are hidden nodes described in the scenario in FIG. 2. Therefore, when the STA 2 sends a signal to the AP 1, the STA 1 determines that a channel is idle, and therefore sends a signal to the AP 1, causing signal overlapping. If an importance coefficient of data sent by the STA 1 at a current moment is higher, the AP 1 may identify the currently received signal based on mark information used by the STA 1. For a specific signal identification process, refer to related descriptions in S802 and S803, or related descriptions of identifying, by the STA 1, the signal sent by the AP 1 in the scenario shown in FIG. 13. Details are not described herein again.

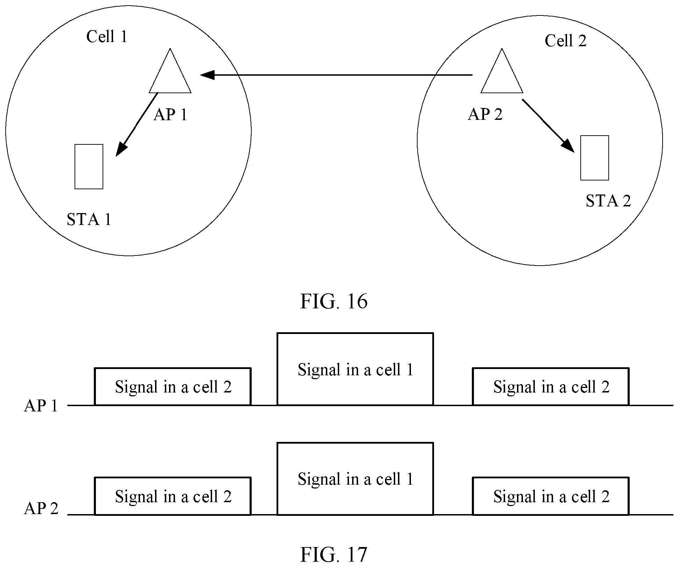

For another example, the signal identification method provided in this embodiment of this application may be further applied to the scenario shown in FIG. 16. As shown in FIG. 16, a cell 1 to which the AP 1 belongs and a cell 2 to which the AP 2 belongs are intra-frequency cells, and the two cells are separated by a specific distance. When an RSSI between the AP 1 and the AP 2 is greater than an ED/CS threshold, the AP 1 and the AP 2 can hear each other. However, because there is a specific distance between the AP 1 and the AP 2, strength of a signal sent by the AP 1 and sensed by the STA 1 is far stronger than strength of a signal sent by the AP 2 and sensed by the STA 1. Therefore, in this case, if signal overlapping occurs, the STA 1 may parse out the signal sent by the AP 1; and when the AP 1 sends the signal to the STA 1, the AP 2 may also send the signal to the STA 2, and parsing of the signals is not affected each other.

However, in this case, if the AP 2 first sends the signal to the STA 2, because the AP 1 can find, through sensing, that the AP 2 is sending the signal, the AP 1 determines that the channel is busy when sensing the channel, and therefore the AP 1 backs off, and sends the signal after the AP 2 finishes sending of the signal. As shown in FIG. 17, the signal in the cell 1 and the signal in the cell 2 are alternately sent. In this case, only one AP sends a signal at a time, and this greatly reduces air interface utilization.

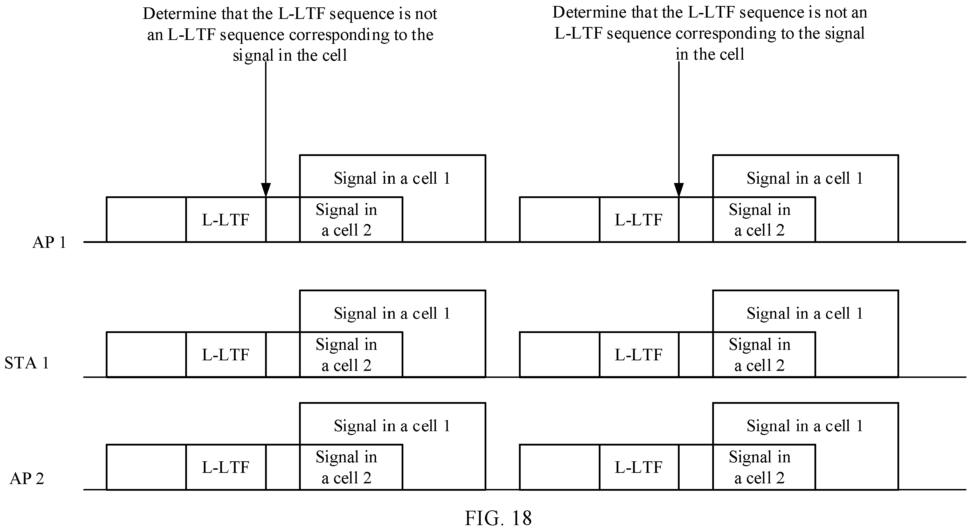

Therefore, the AP 1 and the AP 2 may also mark the L-LTF sequence in different mark manners. For a specific mark manner, refer to the mark manner of the AP 1 to the AP 4 in the scenario in FIG. 13. Details are not described herein again. Therefore, when receiving the signal sent by the AP 2, the AP 1 may identify the L-LTF sequence corresponding to the signal sent by the AP 2, and determine whether the current signal is a signal in a cell (the cell 1) in which the AP 1 is located. If the current signal is not a signal in the cell in which the AP 1 is located, the AP 1 may determine that the channel is idle, and may send a signal without backoff waiting. As shown in FIG. 18, the signal in the cell 1 and the signal in the cell 2 may be sent in parallel, that is, the AP 2 sends the signal to the STA 2, and the AP 1 may also send the signal to the STA 1. Similarly, the STA 1 and the AP 2 may also determine, by detecting whether the current signals are signals sent in the cells in which the STA 1 and the AP 2 are located, whether the signals can be sent. For a specific signal identification process, refer to related descriptions in S803 and S804, or related descriptions of identifying, by the STA 1, the signal sent by the AP 1 in the scenario shown in FIG. 13. Details are not described herein again.

It should be noted that, in the scenario shown in FIG. 16, the receive end may determine, after parsing the L-LTF, whether the channel is idle, and then the receive end may start to send data.

In the scenario shown in FIG. 16, the signal identification method provided in this embodiment of this application is used, so that smarter channel busy/idle detection can be formed, a problem that different intra-frequency cells cannot perform parallel data transmission because of a misjudgment that a channel is busy caused by clear channel assessment (clear channel assessment, CCA) can be avoided, and spectrum utilization can be improved.

It may be understood that, in the foregoing embodiments, the methods and/or steps implemented by the first device may also be implemented by a component (for example, a processor, a chip, a chip system, a circuit, a logical module, or software) that may be used in the first device, and the methods and/or steps implemented by the second device may also be implemented by a component (for example, a processor, a chip, a chip system, a circuit, a logical module, or software) that may be used in the second device.

The foregoing mainly describes the solutions provided in this application. Correspondingly, this application further provides a communication apparatus. The communication apparatus is configured to implement the methods in the foregoing method embodiments. The communication apparatus may be the first device in the method embodiments, an apparatus including the first device, or a component that may be used in the first device, for example, a chip or a chip system. Alternatively, the communication apparatus may be the second device in the method embodiments, an apparatus including the second device, or a component that may be used in the second device, for example, a chip or a chip system.

It may be understood that, to implement the foregoing functions, the communication apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional modules may be performed on the communication apparatus based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used.

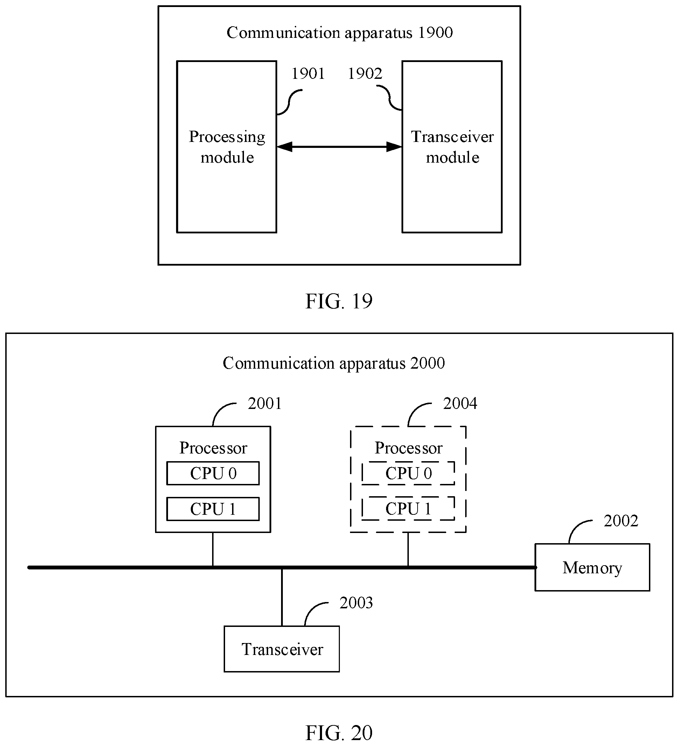

For example, the communication apparatus is the terminal device or the network device in the foregoing method embodiments. FIG. 19 is a diagram of a structure of a communication apparatus according to an embodiment of this application. As shown in FIG. 19, the communication apparatus 1900 includes a processing module 1901 and a transceiver module 1902.

For example, the communication apparatus 1900 is the first device in the foregoing method embodiments.

The transceiver module 1902 is configured to receive a signal frame;

the processing module 1901 is configured to perform channel estimation based on a legacy long training field L-LTF sequence corresponding to the signal frame, to obtain a first channel estimation value, where the first channel estimation value includes channel estimation values corresponding to M subcarrier elements in the L-LTF sequence corresponding to the signal frame; and
the processing module 1901 is further configured to determine, based on the first channel estimation value and mark information of N subcarrier elements, whether the L-LTF sequence corresponding to the signal frame is a target L-LTF sequence, where the mark information of the N subcarrier elements includes sequence numbers of the N subcarrier elements and amplitude and/or phase change values corresponding to the N subcarrier elements, M and N are positive integers, M>1, and 1≤N≤M.

In a possible design solution, the processing module 1901 is further configured to determine, based on a channel estimation value corresponding to a first subcarrier element and the amplitude and/or phase change values corresponding to the N subcarrier elements, whether the L-LTF sequence corresponding to the signal frame is the target L-LTF sequence, where the first subcarrier element is a subcarrier element, in the L-LTF sequence corresponding to the signal frame, whose subcarrier element sequence number corresponds to the sequence numbers of the N subcarrier elements.

In another possible design solution, the processing module 1901 is further configured to:

determine a first subcarrier element and a second subcarrier element based on the sequence numbers of the N subcarrier elements, where the first subcarrier element is a subcarrier element, in the L-LTF sequence corresponding to the signal frame, whose subcarrier element sequence number corresponds to the sequence numbers of the N subcarrier elements, and the second subcarrier element is a subcarrier element, in the L-LTF sequence corresponding to the signal frame, whose subcarrier element sequence number is adjacent to the sequence numbers of the N subcarrier elements; and

determine, based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence.

In a possible design solution, the processing module 1901 is further configured to:

determine a second channel estimation value based on the channel estimation value corresponding to the first subcarrier element, the channel estimation value corresponding to the second subcarrier element, and the amplitude and/or phase change values corresponding to the N subcarrier elements, where the second channel estimation value satisfies the following first relationship: $f_2 = \sum_{i=1}^{N}(\frac{f_{11}(i)}{T_{color}(i)} \times e^{j\pi} + F\_f_{12}(i))$ , where

when a sequence number of an $i^{th}$ subcarrier element in the second subcarrier element is different from a sequence number of a subcarrier element in the N subcarrier elements, $F\_f_{12}(i) = f_{12}(i)$; or when a sequence number of an $i^{th}$ subcarrier element in the second subcarrier element is the same as a sequence number of a subcarrier element in the N subcarrier elements, $F\_f_{12}(i) = \frac{f_{12}(i)}{T_{color}(\cdot)}$ , where $f_2$ is the second channel estimation value, $f_{11}(i)$ is a channel estimation value corresponding to an $i^{th}$ subcarrier element in the first subcarrier element, $T_{color}(i)$ is an amplitude and/or phase change value corresponding to an $i^{th}$ subcarrier element in the N subcarrier elements, $f_{12}(i)$ is a channel estimation value corresponding to the $i^{th}$ subcarrier element in the second subcarrier element, $T_{color}(\cdot)$ is an amplitude and/or phase change value corresponding to a subcarrier element, in the N subcarrier elements, whose sequence number is the same as that of the $i^{th}$ subcarrier element in the second subcarrier element, a sequence number of the $i^{th}$ subcarrier element in the first subcarrier element is the same as a sequence number of the $i^{th}$ subcarrier element in the N subcarrier elements, the $i^{th}$ subcarrier element in the second subcarrier element is a subcarrier element whose sequence number is adjacent to that of the $i^{th}$ subcarrier element in the N subcarrier elements, i is a positive integer, and 1≤i≤N; and

when an absolute value of the second channel estimation value is less than a first threshold, determine that the L-LTF sequence corresponding to the signal frame is the target L-LTF sequence; or

when an absolute value of the second channel estimation value is greater than or equal to the first threshold, determine that the L-LTF sequence corresponding to the signal frame is not the target L-LTF sequence.

In another possible design solution, the processing module 1901 is further configured to:

determine a second channel estimation value and a third channel estimation value based on the channel estimation value corresponding to the first subcarrier element, the channel estimation value corresponding to the second subcarrier element, and the amplitude and/or phase change values corresponding to the N subcarrier elements, where the second channel estimation value satisfies the following second relationship: $f_2 = \sum_{i=1}^{N}(\frac{f_{11}(i)}{T_{color}(i)} \times e^{j\pi} + F\_f_{12}(i))$ ; and the third channel estimation value satisfies the following third relationship: $f_3 = \sum_{i=1}^{N}(\frac{f_{11}(i)}{T_{color}(i)} + F\_f_{12}(i))$ , where

when a sequence number of an $i^{th}$ subcarrier element in the second subcarrier element is different from a sequence number of a subcarrier element in the N subcarrier elements, $F\_f_{12}(i) = f_{12}(i)$; or when a sequence number of an $i^{th}$ subcarrier element in the second subcarrier element is the same as a sequence number of a subcarrier element in the N subcarrier elements, $F\_f_{12}(i) = \frac{f_{12}(i)}{T_{color}(\cdot)}$ , where $f_2$ is the second channel estimation value, $f_3$ is the third channel estimation value, $f_{11}(i)$ is a channel estimation value corresponding to an $i^{th}$ subcarrier element in the first subcarrier element, $T_{color}(i)$ is an amplitude and/or phase change value corresponding to an $i^{th}$ subcarrier element in the N subcarrier elements, $f_{12}(i)$ is a channel estimation value corresponding to the $i^{th}$ subcarrier element in the second subcarrier element, $T_{color}(\cdot)$ is an amplitude and/or phase change value corresponding to a subcarrier element, in the N subcarrier elements, whose sequence number is the same as that of the $i^{th}$ subcarrier element in the second subcarrier element, a sequence number of the $i^{th}$ subcarrier element in the first subcarrier element is the same as a sequence number of the $i^{th}$ subcarrier element in the N subcarrier elements, the $i^{th}$ subcarrier element in the second subcarrier element is a subcarrier element whose sequence number is adjacent to that of the $i^{th}$ subcarrier element in the N subcarrier elements, i is a positive integer, and $1 \leq i \leq N$; and

determine, based on the second channel estimation value and the third channel estimation value, whether the L-LTF sequence corresponding to the signal frame is the target L-LTF sequence.

In a possible design solution, the processing module 1901 is further configured to:

when a ratio of an absolute value of the second channel estimation value to an absolute value of the third channel estimation value is less than a second threshold, determine that the L-LTF sequence corresponding to the signal frame is the target L-LTF sequence; or

when a ratio of an absolute value of the second channel estimation value to an absolute value of the third channel estimation value is greater than or equal to the second threshold, determine that the L-LTF sequence corresponding to the signal frame is not the target L-LTF sequence.

For example, the communication apparatus 1900 is the second device in the foregoing method embodiments.

The processing module 1901 is configured to mark amplitudes and/or phases of N subcarrier elements in a legacy long training field L-LTF sequence corresponding to a signal frame, where the L-LTF sequence corresponding to the signal frame includes M subcarrier elements, M and N are positive integers, M>1, and $1 \leq N \leq M$; and

the transceiver module 1902 is configured to send the signal frame to a first device.

In a possible design solution, when the N subcarrier elements include subcarriers with consecutive sequence numbers, amplitude and phase change values of subcarrier elements with adjacent sequence numbers are different.

Optionally, in this embodiment of this application, the transceiver module 1902 may include a receiving module and a sending module (not shown in FIG. 19). The transceiver module is configured to implement a sending function and a receiving function of the communication apparatus 1900.

Optionally, the communication apparatus 1900 may further include a storage module (not shown in FIG. 19). The storage module stores a program or instructions. When the processing module 1901 executes the program or the instructions, the communication apparatus 1900 may perform a function of the first device or the second device in the method shown in FIG. 8.

It should be understood that the processing module 1901 in the communication apparatus 1900 may be implemented by a processor or a processor-related circuit component, and may be a processor or a processing unit. The transceiver module 1902 may be implemented by a transceiver or a transceiver-related circuit component, and may be a transceiver or a transceiver unit.

All related content of the steps in the foregoing method embodiments may be cited in function descriptions of the corresponding functional modules. Details are not described herein again.

Because the communication apparatus 1900 provided in this embodiment may perform the foregoing signal identification method, for technical effect that can be achieved by the communication apparatus 1900, refer to the foregoing method embodiments. Details are not described herein again.

For example, FIG. 20 is a diagram of a structure of another communication apparatus according to an embodiment of this application. The communication apparatus may be a first device or a second device, or may be a chip (system) or another part or component that may be disposed in the first device or the second device. As shown in FIG. 20, the communication apparatus 2000 may include a processor 2001. Optionally, the communication apparatus 2000 may further include a memory 2002 and/or a transceiver 2003. The processor 2001 is coupled to the memory 2002 and the transceiver 2003, for example, may be connected to the memory 2002 and the transceiver 2003 through a communication bus.

The following describes each component of the communication apparatus 2000 in detail with reference to FIG. 20.

The processor 2001 is a control center of the communication apparatus 2000, and may be one processor, or may be a collective term of a plurality of processing elements. For example, the processor 2001 is one or more central processing units (central processing units, CPU), or may be an application-specific integrated circuit (application-specific integrated circuit, ASIC), or is one or more integrated circuits configured to implement embodiments of this application, for example, one or more microprocessors (digital signal processors, DSP) or one or more field programmable gate arrays (field programmable gate arrays, FPGA).

Optionally, the processor 2001 may perform various functions of the communication apparatus 2000 by running or executing a software program stored in the memory 2002 and invoking data stored in the memory 2002.

During specific implementation, in an embodiment, the processor 2001 may include one or more CPUs, for example, a CPU 0 and a CPU 1 shown in FIG. 20.

During specific implementation, in an embodiment, the communication apparatus 2000 may also include a plurality of processors, for example, the processor 2001 and a processor 2004 shown in FIG. 20. Each of the processors may be a single-core processor (single-CPU), or may be a multi-core processor (multi-CPU). The processor herein may be one or more devices, circuits, and/or processing cores configured to process data (for example, computer program instructions).

The memory 2002 is configured to store a software program for executing the solutions of this application, and the processor 2001 controls execution of the software program. For a specific implementation, refer to the foregoing method embodiments. Details are not described herein again.

Optionally, the memory 2002 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 2002 may be integrated with the processor 2001, or may exist independently, and is coupled to the processor 2001 through an interface circuit (not shown in FIG. 20) of the communication apparatus 2000. This is not specifically limited in this embodiment of this application.

The transceiver 2003 is configured to communicate with another communication apparatus. For example, the communication apparatus 2000 is a terminal device, and the transceiver 2003 may be configured to communicate with a network device or communicate with another terminal device. For another example, the communication apparatus 2000 is a network device, and the transceiver 2003 may be configured to communicate with a terminal device or communicate with another network device.

Optionally, the transceiver 2003 may include a receiver and a transmitter (not separately shown in FIG. 20). The receiver is configured to implement a receiving function, and the transmitter is configured to implement a sending function.

Optionally, the transceiver 2003 may be integrated with the processor 2001, or may exist independently, and is coupled to the processor 2001 through an interface circuit (not shown in FIG. 20) of the communication apparatus 2000. This is not specifically limited in this embodiment of this application.

Optionally, the processor 2001 is mainly configured to: process a communication protocol and communication data, control the entire communication apparatus, execute a software program, and process data of the software program. The memory 2002 is mainly configured to store a software program and data. The transceiver 2003 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. An input/output apparatus, for example, a touchscreen, a display, or a keyboard, is mainly configured to: receive data input by a user, and output data to the user.

The processor 2001, the transceiver 2003, and the memory 2002 may be connected through a communication bus.

After the communication apparatus is powered on, the processor 2001 may read the software program from the memory 2002, interpret and execute instructions of the software program, and process data of the software program. When data needs to be sent in a wireless manner, the processor 2001 performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 2001. The processor 2001 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independent of the communication apparatus.

The processor 2001 may be configured to perform, for example but not limited to, baseband related processing; and the transceiver 2003 may be configured to perform, for example but not limited to, radio frequency sending or receiving. The foregoing components may be separately disposed on chips that are independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of integrated circuit technologies, increasing components may be integrated on a same chip. For example, the digital baseband processor may be integrated on a same chip with a plurality of application processors (for example, but not limited to, a geometric processor and a multimedia processor). The chip may be referred to as a system-on-chip (system on chip). Whether the components are independently disposed on different chips or are disposed on one or more chips in an integrated manner usually depends on specific requirements of a product design. Specific implementation forms of the components are not limited in embodiments of the present invention.

It should be noted that the structure of the communication apparatus 2000 shown in FIG. 20 does not constitute a limitation on the communication apparatus. An actual communication apparatus may include more or fewer components than those shown in the figure, or combine some components, or have different component arrangements.

In addition, for technical effect of the communication apparatus 2000, refer to the technical effect of the communication method in the foregoing method embodiments. Details are not described herein again.

An embodiment of this application provides a communication system. The communication system includes the foregoing first device and the foregoing second device.

In some embodiments, this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include the memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read through another component), and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions; and when the computer program or the instructions are executed by a computer, functions in any one of foregoing method embodiments are implemented.

This application further provides a computer program product. When the computer program product is executed by a computer, functions in any one of foregoing method embodiments are implemented.

A person of ordinary skill in the art may understand that, for the purpose of convenient and brief description, for a detailed working process of the foregoing system, apparatuses, and units, refer to corresponding processes in the foregoing method embodiments. Details are not described herein again.

It should be understood that the term "and/or" in this specification describes only an association between associated objects and represents that three relationships may exist. For example, A and/or B may represent the following three cases: only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that the system, apparatuses, and methods described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, this is, may be located in one place, or may be distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by software, hardware, firmware, or any combination thereof. When a software program is used to implement embodiments, the embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the apparatuses described above.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the spirit and scope of this application. In this case, this application is intended to cover these modifications and variations of this application provided that they fall within the scope of protection defined by the claims of this application and their equivalent technologies.

**Claims**

1. A signal identification method, wherein the method comprises:

   receiving, by a first device, a signal frame;
   performing, by the first device, channel estimation based on a legacy long training field L-LTF sequence corresponding to the signal frame, to obtain a first channel estimation value, wherein the first channel estimation value comprises channel estimation values corresponding to M subcarrier elements in the L-LTF sequence corresponding to the signal frame; and
   determining, by the first device based on the first channel estimation value and mark information of N subcarrier elements, whether the L-LTF sequence corresponding to the signal frame is a target L-LTF sequence, wherein the mark information of the N subcarrier elements comprises sequence numbers of the N subcarrier elements and amplitude and/or phase change values corresponding to the N subcarrier elements, M and N are positive integers, M>1, and 1≤N≤M.

2. The method according to claim 1, wherein the determining, by the first device based on the first channel estimation value and mark information of N subcarrier elements, whether the L-LTF sequence corresponding to the signal frame is a target L-LTF sequence comprises:

   determining, by the first device, a first subcarrier element and a second subcarrier element based on the sequence numbers of the N subcarrier elements, wherein the first subcarrier element is a subcarrier element, in the L-LTF sequence corresponding to the signal frame, whose subcarrier element sequence number corresponds to the sequence numbers of the N subcarrier elements, and the second subcarrier element is a subcarrier element, in the L-LTF sequence corresponding to the signal frame, whose subcarrier element sequence number is adjacent to the sequence numbers of the N subcarrier elements; and

determining, by the first device based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence.

3. The method according to claim 2, wherein the determining, by the first device based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence comprises:

determining, by the first device, a second channel estimation value based on the channel estimation value corresponding to the first subcarrier element, the channel estimation value corresponding to the second subcarrier element, and the amplitude and/or phase change values corresponding to the N subcarrier elements, wherein the second channel estimation value satisfies the following first relationship:

$$f_2 = \sum_{i=1}^{N} \left( \frac{f_{11}(i)}{T_{color}(i)} \times e^{j\pi} + F\_f_{12}(i) \right),$$

wherein

when a sequence number of an $i^{th}$ subcarrier element in the second subcarrier element is different from a sequence number of a subcarrier element in the N subcarrier elements, $F\_f_{12}(i) = f_{12}(i)$; or

when a sequence number of an $i^{th}$ subcarrier element in the second subcarrier element is the same as a sequence number of a subcarrier element in the N subcarrier elements, $F\_f_{12}(i) = \frac{f_{12}(i)}{T_{color}(\cdot)}$ , wherein

$f_2$ is the second channel estimation value, $f_{11}(i)$ is a channel estimation value corresponding to an $i^{th}$ subcarrier element in the first subcarrier element, $T_{color}(i)$ is an amplitude and/or phase change value corresponding to an $i^{th}$ subcarrier element in the N subcarrier elements, $f_{12}(i)$ is a channel estimation value corresponding to the $i^{th}$ subcarrier element in the second subcarrier element, $T_{color}(\cdot)$ is an amplitude and/or phase change value corresponding to a subcarrier element, in the N subcarrier elements, whose sequence number is the same as that of the $i^{th}$ subcarrier element in the second subcarrier element, a sequence number of the $i^{th}$ subcarrier element in the first subcarrier element is the same as a sequence number of the $i^{th}$ subcarrier element in the N subcarrier elements, the $i^{th}$ subcarrier element in the second subcarrier element is a subcarrier element whose sequence number is adjacent to that of the $i^{th}$ subcarrier element in the N subcarrier elements, i is a positive integer, and $1 \le i \le N$; and

when an absolute value of the second channel estimation value is less than a first threshold, determining, by the first device, that the L-LTF sequence corresponding to the signal frame is the target L-LTF sequence; or

when an absolute value of the second channel estimation value is greater than or equal to the first threshold, determining, by the first device, that the L-LTF sequence corresponding to the signal frame is not the target L-LTF sequence.

4. The method according to claim 2, wherein the determining, by the first device based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence comprises:

determining, by the first device, a second channel estimation value and a third channel estimation value based on the channel estimation value corresponding to the first subcarrier element, the channel estimation value corresponding to the second subcarrier element, and the amplitude and/or phase change values corresponding to the N subcarrier elements, wherein the second channel estimation value satisfies the following second relationship:

$$f_2 = \sum_{i=1}^{N} \left( \frac{f_{11}(i)}{T_{color}(i)} \times e^{j\pi} + F\_f_{12}(i) \right);$$

and
the third channel estimation value satisfies the following third relationship:

$$f_3 = \sum_{i=1}^{N} \left( \frac{f_{11}(i)}{T_{color}(i)} + F\_f_{12}(i) \right),$$

wherein
when a sequence number of an $i^{th}$ subcarrier element in the second subcarrier element is different from a sequence number of a subcarrier element in the N subcarrier elements, $F\_f_{12}(i) = f_{12}(i)$; or
when a sequence number of an $i^{th}$ subcarrier element in the second subcarrier element is the same as a sequence

$$F\_f_{12}(i) = \frac{f_{12}(i)}{T_{color}(\cdot)},$$

number of a subcarrier element in the N subcarrier elements, $\quad$ , wherein
$f_2$ is the second channel estimation value, $f_3$ is the third channel estimation value, $f_{11}(i)$ is a channel estimation value corresponding to an $i^{th}$ subcarrier element in the first subcarrier element, $T_{color}(i)$ is an amplitude and/or phase change value corresponding to an $i^{th}$ subcarrier element in the N subcarrier elements, $f_{12}(i)$ is a channel estimation value corresponding to the $i^{th}$ subcarrier element in the second subcarrier element, $T_{color}(\cdot)$ is an amplitude and/or phase change value corresponding to a subcarrier element, in the N subcarrier elements, whose sequence number is the same as that of the $i^{th}$ subcarrier element in the second subcarrier element, a sequence number of the $i^{th}$ subcarrier element in the first subcarrier element is the same as a sequence number of the $i^{th}$ subcarrier element in the N subcarrier elements, the $i^{th}$ subcarrier element in the second subcarrier element is a subcarrier element whose sequence number is adjacent to that of the $i^{th}$ subcarrier element in the N subcarrier elements, i is a positive integer, and $1 \leq i \leq N$; and
determining, by the first device based on the second channel estimation value and the third channel estimation value, whether the L-LTF sequence corresponding to the signal frame is the target L-LTF sequence.

5. The method according to claim 4, wherein the determining, by the first device based on the second channel estimation value and the third channel estimation value, whether the L-LTF sequence corresponding to the signal frame is the target L-LTF sequence comprises:

   when a ratio of an absolute value of the second channel estimation value to an absolute value of the third channel estimation value is less than a second threshold, determining, by the first device, that the L-LTF sequence corresponding to the signal frame is the target L-LTF sequence; or
   when a ratio of an absolute value of the second channel estimation value to an absolute value of the third channel estimation value is greater than or equal to the second threshold, determining, by the first device, that the L-LTF sequence corresponding to the signal frame is not the target L-LTF sequence.

6. A signal identification method, wherein the method comprises:

   marking, by a second device, amplitudes and/or phases of N subcarrier elements in a legacy long training field L-LTF sequence corresponding to a signal frame, wherein the L-LTF sequence corresponding to the signal frame comprises M subcarrier elements, M and N are positive integers, M>1, and $1 \leq N \leq M$; and
   sending, by the second device, the signal frame to a first device.

7. The method according to claim 6, wherein when the N subcarrier elements comprise subcarriers with consecutive sequence numbers, amplitude and phase change values of subcarrier elements with adjacent sequence numbers are different.

8. A communication apparatus, wherein the apparatus comprises a processing module and a transceiver module, wherein

   the transceiver module is configured to receive a signal frame;
   the processing module is configured to perform channel estimation based on a legacy long training field L-LTF sequence corresponding to the signal frame, to obtain a first channel estimation value, wherein the first channel estimation value comprises channel estimation values corresponding to M subcarrier elements in the L-LTF sequence corresponding to the signal frame; and
   the processing module is further configured to determine, based on the first channel estimation value and mark information of N subcarrier elements, whether the L-LTF sequence corresponding to the signal frame is a target L-LTF sequence, wherein the mark information of the N subcarrier elements comprises sequence numbers of the N subcarrier elements and amplitude and/or phase change values corresponding to the N subcarrier elements, M and N are positive integers, M>1, and 1≤N≤M.

9. The apparatus according to claim 8, wherein that the processing module is further configured to determine, based on the first channel estimation value and mark information of N subcarrier elements, whether the L-LTF sequence corresponding to the signal frame is a target L-LTF sequence comprises:

the processing module is configured to determine a first subcarrier element and a second subcarrier element based on the sequence numbers of the N subcarrier elements, wherein the first subcarrier element is a subcarrier element, in the L-LTF sequence corresponding to the signal frame, whose subcarrier element sequence number corresponds to the sequence numbers of the N subcarrier elements, and the second subcarrier element is a subcarrier element, in the L-LTF sequence corresponding to the signal frame, whose subcarrier element sequence number is adjacent to the sequence numbers of the N subcarrier elements; and
the processing module is further configured to determine, based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence.

10. The apparatus according to claim 9, wherein that the processing module is further configured to determine, based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence comprises:

the processing module is configured to determine a second channel estimation value based on the channel estimation value corresponding to the first subcarrier element, the channel estimation value corresponding to the second subcarrier element, and the amplitude and/or phase change values corresponding to the N subcarrier elements, wherein the second channel estimation value satisfies the following first relationship:

$$f_2 = \sum_{i=1}^{N}(\frac{f_{11}(i)}{T_{color}(i)} \times e^{j\pi} + F\_f_{12}(i)),$$

wherein
when a sequence number of an $i^{th}$ subcarrier element in the second subcarrier element is different from a sequence number of a subcarrier element in the N subcarrier elements, $F\_f_{12}(i) = f_{12}(i)$; or
when a sequence number of an $i^{th}$ subcarrier element in the second subcarrier element is the same as a sequence number of a subcarrier element in the N subcarrier elements, $F\_f_{12}(i) = \frac{f_{12}(i)}{T_{color}(\cdot)}$ , wherein
$f_2$ is the second channel estimation value, $f_{11}(i)$ is a channel estimation value corresponding to an $i^{th}$ subcarrier element in the first subcarrier element, $T_{color}(i)$ is an amplitude and/or phase change value corresponding to an $i^{th}$ subcarrier element in the N subcarrier elements, $f_{12}(i)$ is a channel estimation value corresponding to the $i^{th}$ subcarrier element in the second subcarrier element, $T_{color}(\cdot)$ is an amplitude and/or phase change value corresponding to a subcarrier element, in the N subcarrier elements, whose sequence number is the same as that of the $i^{th}$ subcarrier element in the second subcarrier element, a sequence number of the $i^{th}$ subcarrier element in the first subcarrier element is the same as a sequence number of the $i^{th}$ subcarrier element in the N subcarrier elements, the $i^{th}$ subcarrier element in the second subcarrier element is a subcarrier element whose sequence number is adjacent to that of the $i^{th}$ subcarrier element in the N subcarrier elements, i is a positive integer, and 1≤i≤N; and
the processing module is further configured to: when an absolute value of the second channel estimation value is less than a first threshold, determine that the L-LTF sequence corresponding to the signal frame is the target L-LTF sequence; or
the processing module is further configured to: when an absolute value of the second channel estimation value is greater than or equal to the first threshold, determine that the L-LTF sequence corresponding to the signal frame is not the target L-LTF sequence.

11. The apparatus according to claim 9, wherein that the processing module is further configured to determine, based on a channel estimation value corresponding to the first subcarrier element, a channel estimation value corresponding to the second subcarrier element, and the amplitude and/or phase change values corresponding to the N subcarrier elements in the first channel estimation value, whether the L-LTF sequence corresponding to the signal frame is the target L-LTF sequence comprises:

the processing module is configured to determine a second channel estimation value and a third channel estimation value based on the channel estimation value corresponding to the first subcarrier element, the channel estimation value corresponding to the second subcarrier element, and the amplitude and/or phase change values corresponding to the N subcarrier elements, wherein the second channel estimation value satisfies the following second relationship:

$$f_2 = \sum_{i=1}^{N}\left(\frac{f_{11}(i)}{T_{color}(i)} \times e^{j\pi} + F\_f_{12}(i)\right);$$

and
the third channel estimation value satisfies the following third relationship:

$$f_3 = \sum_{i=1}^{N}\left(\frac{f_{11}(i)}{T_{color}(i)} + F\_f_{12}(i)\right), \text{ wherein}$$

wherein
when a sequence number of an $i^{th}$ subcarrier element in the second subcarrier element is different from a sequence number of a subcarrier element in the N subcarrier elements, $F\_f_{12}(i) = f_{12}(i)$; or
when a sequence number of an $i^{th}$ subcarrier element in the second subcarrier element is the same as a sequence number of a subcarrier element in the N subcarrier elements, $F\_f_{12}(i) = \frac{f_{12}(i)}{T_{color}(\cdot)}$, wherein
$f_2$ is the second channel estimation value, $f_3$ is the third channel estimation value, $f_{11}(i)$ is a channel estimation value corresponding to an $i^{th}$ subcarrier element in the first subcarrier element, $T_{color}(i)$ is an amplitude and/or phase change value corresponding to an $i^{th}$ subcarrier element in the N subcarrier elements, $f_{12}(i)$ is a channel estimation value corresponding to the $i^{th}$ subcarrier element in the second subcarrier element, $T_{color}(\cdot)$ is an amplitude and/or phase change value corresponding to a subcarrier element, in the N subcarrier elements, whose sequence number is the same as that of the $i^{th}$ subcarrier element in the second subcarrier element, a sequence number of the $i^{th}$ subcarrier element in the first subcarrier element is the same as a sequence number of the $i^{th}$ subcarrier element in the N subcarrier elements, the $i^{th}$ subcarrier element in the second subcarrier element is a subcarrier element whose sequence number is adjacent to that of the $i^{th}$ subcarrier element in the N subcarrier elements, i is a positive integer, and 1≤i≤N; and
the processing module is further configured to determine, based on the second channel estimation value and the third channel estimation value, whether the L-LTF sequence corresponding to the signal frame is the target L-LTF sequence.

12. The apparatus according to claim 11, wherein that the processing module is further configured to determine, based on the second channel estimation value and the third channel estimation value, whether the L-LTF sequence corresponding to the signal frame is the target L-LTF sequence comprises:

the processing module is further configured to: when a ratio of an absolute value of the second channel estimation value to an absolute value of the third channel estimation value is less than a second threshold, determine that the L-LTF sequence corresponding to the signal frame is the target L-LTF sequence; or
the processing module is further configured to: determine, based on the second channel estimation value and the third channel estimation value, whether the L-LTF sequence corresponding to the signal frame is the target L-LTF sequence; and when a ratio of an absolute value of the second channel estimation value to an absolute value of the third channel estimation value is greater than or equal to the second threshold, determine that the L-LTF sequence corresponding to the signal frame is not the target L-LTF sequence.

13. A communication apparatus, wherein the apparatus comprises a processing module and a transceiver module, wherein

the processing module is configured to mark amplitudes and/or phases of N subcarrier elements in a legacy long training field L-LTF sequence corresponding to a signal frame, wherein the L-LTF sequence corresponding to the signal frame comprises M subcarrier elements, M and N are positive integers, M>1, and 1≤N≤M; and the transceiver module is configured to send the signal frame to a first device.

14. The apparatus according to claim 13, wherein when the N subcarrier elements comprise subcarriers with consecutive sequence numbers, amplitude and phase change values of subcarrier elements with adjacent sequence numbers are different.

15. A communication apparatus, comprising a processor, wherein the processor is coupled to a memory;

the memory is configured to store a computer program; and
the processor is configured to execute the computer program stored in the memory, to enable the communication apparatus to perform the method according to any one of claims 1 to 7.

16. A computer-readable storage medium, wherein the computer-readable storage medium stores a computer program or instructions; and when the computer program or the instructions are run on a computer, the computer is enabled to perform the method according to any one of claims 1 to 7.

17. A computer program product, wherein the computer program product comprises a computer program or instructions; and when the computer program or the instructions are run on a computer, the computer is enabled to perform the method according to any one of claims 1 to 7.

Channel 1
Channel 2
Channel 3
Channel 4
Channel 5
Channel 6
Channel 7
Channel 8

AP 1

STA 1

RSSI<−82 dBm

STA 2

AP 2

FIG. 1

STA 1

STA 2

AP 1

FIG. 2

Transmit
end 1

| Preamble | |
|----------|--|

Transmit
end 2

| DIFS | Slot | Slot | Preamble | |
|------|------|------|----------|--|

A data packet arrives

FIG. 3

Power P

P2

△P

P1

Target frame

Interference
frame

t1

△t

Time t

FIG. 4

| 8 µs | 8 µs | 4 µs | 8 µs | 4 µs | 4 µs/VHT-LTF symbol | 4 µs | |
|------|------|------|------|------|---------------------|------|--|
| L-STF | L-LTF | L-SIG | VHT-SIG-A | VHT-STF | VHT-LTF | VHT-SIG-B | Data |

FIG. 5

FIG. 6

FIG. 7

Second device

First device

S801: Mark amplitudes and/or phases of N subcarrier elements in an L-LTF sequence corresponding to a signal frame

S802: Signal frame

S803: Perform channel estimation based on the L-LTF sequence corresponding to the signal frame, to obtain a first channel estimation value

S804: Determine, based on the first channel estimation value and mark information of the N subcarrier elements, whether the L-LTF sequence corresponding to the signal frame is a target L-LTF sequence

FIG. 8

| 8 μs | | 8 μs | | 4 μs | 4 μs | 4 μs |
|---|---|---|---|---|---|---|

| t1 | t2 | t3 | t4 | t5 | t6 | t7 | t8 | t9 | t10 | GI | T1 | T2 | GI | Signaling | GI | Data 1 | GI | Data 2 | GI | ... |

L-STF                          L-LTF

FIG. 9

FIG. 10

FIG. 11

FIG. 12

EP 4 542 941 A1

FIG. 13

FIG. 14

FIG. 15

FIG. 16

FIG. 17

Determine that the L-LTF sequence is not an L-LTF sequence corresponding to the signal in the cell

Determine that the L-LTF sequence is not an L-LTF sequence corresponding to the signal in the cell

AP 1

L-LTF | Signal in a cell 2 | Signal in a cell 1

L-LTF | Signal in a cell 2 | Signal in a cell 1

STA 1

L-LTF | Signal in a cell 2 | Signal in a cell 1

L-LTF | Signal in a cell 2 | Signal in a cell 1

AP 2

L-LTF | Signal in a cell 2 | Signal in a cell 1

L-LTF | Signal in a cell 2 | Signal in a cell 1

FIG. 18

Communication apparatus 1900

Processing module ⟵⟶ Transceiver module

1901  1902

FIG. 19

Communication apparatus 2000

Processor 2001
CPU 0
CPU 1

Processor 2004
CPU 0
CPU 1

Memory 2002

Transceiver 2003

FIG. 20

## INTERNATIONAL SEARCH REPORT

| International application No. |
| --- |
| **PCT/CN2023/104974** |

**A.    CLASSIFICATION OF SUBJECT MATTER**

H04L25/02(2006.01)i;  H04L27/26(2006.01)i

According to International Patent Classification (IPC) or to both national classification and IPC

**B.    FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

3GPP; CNTXT; VEN; ENTXT; CNKI: 传统长训练域, 长训练域, 信道, 信息通路, 信息通道, 波道, 估计, 预测, 预估, 估算, 子载波, 振幅, 幅度, 相位, L-LTF, LTF, legacy long training field, subcarrier?, amplitude, phase, channel, tunnel, estimate, estimation, calculat+

**C.    DOCUMENTS CONSIDERED TO BE RELEVANT**

| Category* | Citation of document, with indication, where appropriate, of the relevant passages | Relevant to claim No. |
| --- | --- | --- |
| A | CN 106888179 A (SHANGHAI WUJIANG INFORMATION TECHNOLOGY CO., LTD.) 23 June 2017 (2017-06-23)<br> description, paragraphs [0039]-[0121], and figures 1-4 | 1-17 |
| A | CN 109150769 A (HUAWEI TECHNOLOGIES CO., LTD.) 04 January 2019 (2019-01-04)<br> entire document | 1-17 |
| A | US 2015334708 A1 (NEWRACOM INC.) 19 November 2015 (2015-11-19)<br> entire document | 1-17 |
| A | US 2017265129 A1 (INTEL CORP.) 14 September 2017 (2017-09-14)<br> entire document | 1-17 |
| A | AT&T. "Enhancements for NR-U in Rel 17"<br> *3GPP TSG RAN MEETING #85 RP-192113*, 10 September 2019 (2019-09-10),<br> entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 September 2023** | **06 October 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT<br>Information on patent family members | | | | International application No.<br>**PCT/CN2023/104974** | | | |
|---|---|---|---|---|---|---|---|
| Patent document<br>cited in search report | | | Publication date<br>(day/month/year) | Patent family member(s) | | | Publication date<br>(day/month/year) |
| CN | 106888179 | A | 23 June 2017 | None | | | |
| CN | 109150769 | A | 04 January 2019 | WO | 2018228426 | A1 | 20 December 2018 |
| | | | | EP | 3633940 | A1 | 08 April 2020 |
| | | | | EP | 3633940 | A4 | 06 May 2020 |
| | | | | EP | 3633940 | B1 | 27 April 2022 |
| US | 2015334708 | A1 | 19 November 2015 | KR | 20150128613 | A | 18 November 2015 |
| | | | | US | 2018324800 | A1 | 08 November 2018 |
| | | | | US | 10904878 | B2 | 26 January 2021 |
| | | | | US | 10057899 | B2 | 21 August 2018 |
| | | | | US | 2021127392 | A1 | 29 April 2021 |
| US | 2017265129 | A1 | 14 September 2017 | BR | 112018067994 | A2 | 15 January 2019 |
| | | | | US | 2018199283 | A1 | 12 July 2018 |
| | | | | US | 10405273 | B2 | 03 September 2019 |
| | | | | WO | 2017155649 | A2 | 14 September 2017 |
| | | | | WO | 2017155649 | A3 | 26 July 2018 |
| | | | | EP | 3427434 | A2 | 16 January 2019 |
| | | | | EP | 3427434 | A4 | 11 September 2019 |
| | | | | EP | 3427434 | B1 | 23 September 2020 |
| | | | | US | 10009840 | B2 | 26 June 2018 |

Form PCT/ISA/210 (patent family annex) (July 2022)